# EUROPEAN PATENT SPECIFICATION

(11) **EP 2 521 857 B1**
(45) Date of publication and mention of the grant of the patent: **30.12.2015**
(21) Application number: 10842366.6
(22) Date of filing: 05.01.2010
(51) Int. Cl.: F03D 3/00, F03D 3/04, F03D 3/06, F03D 7/06, F03D 1/04

(54) **VERTICAL AXIS VARIABLE GEOMETRY WIND ENERGY COLLECTION SYSTEM**
WINDENERGIEGEWINNUNGSSYSTEM MIT VERTIKALER ACHSE UND VARIABLER GEOMETRIE
SYSTEME DE CAPTAGE D'ENERGIE EOLIENNE A AXE VERTICAL ET GEOMETRIE VARIABLE

(43) Date of publication of application: 14.11.2012
(73) Proprietor: Aaron, Michael, Clarksville, Tennessee 37040 (US)
(72) Inventor: Aaron, Michael, Clarksville, Tennessee 37040 (US)
(74) Representative: Celestino, Marco
(86) International application number: PCT/US2010/020145
(87) International publication number: WO 2011/084154

(56) References cited:
- DE-A1- 3 828 361
- FR-A1- 2 292 128
- GB-A- 2 275 970
- US-A- 4 365 929
- US-A- 4 474 529
- US-A1- 2008 309 089
- US-B2- 6 952 058
- US-B2- 7 488 150

## Description

This invention relates to a device with which to efficiently capture wind energy and transform it into electrical power.

### BACKGROUND OF THE INVENTION

Wind has been utilized by mankind throughout history for power to mill grains, to power transmissions used in industrial processes, and to power transportation. With the current environment of energy supply from fossil based fuels becoming more scarce and expensive, wind power is being considered increasingly as an alternative means to provide electrical power.

At present the prevailing design for a typical wind generator employs the classical wind turbine whereby a nacelle assembly housing the generator and reduction gears is mounted atop a tall tower with large turbine blade structures connected to the prime mover shaft on a horizontal axis of rotation being driven by wind power. To be viable such designs must be large in scale and located in areas of relatively high average wind speed. The cost of installation of such huge structures make such designs prohibitive for individuals or small electric cooperatives. There is an additional cost associated with providing the necessary transmission infrastructure to connect the output of these devices to the existing electrical grid as these devices are typically located far from a grid.

Devices of this type of design must be placed in a standby mode of operation whenever wind speeds exceed a safe maximum valure due to the structural limitations of the turbine blades and reduction gears. Conversely devices of this type have a relatively high threshold of wind speed before operation can be initiated due to the large inertial and frictional forces associated with startup.

The size of the structures associated with this type of design has been found to pose a hazard to wildlife as well as being unsightly to the landscape. In addition, there has been some speculation that the harmonic frequencies generated by the high tip speeds of the turbines may be harmful to humans and wildlife.

### BACKGROUND OF INVENTION -- OBJECTS AND ADVANTAGES

While my invention may be scalable in size to that approaching the abovementioned wind turbine design, it lends itself to smaller, modular installations that are less intrusive on the landscape. Because my design has a vertical axis of rotation, it allows installation upon existing utility poles thereby alleviating the costs involved with erecting additional structures. The fact that my invention may be mounted upon existing utility poles means that its power output can be connected directly to the grid with a minimal amount of time and material cost thereby leveraging existing infrastructure.

There are no reduction gears associated with my design thereby making it more efficient without the attendant loss of usable power due to frictional forces inherent in designs where gears are used. My invention is designed such that it operates with lower wind speed than is typical with other designs and has features that permit more wind speed than is typical with other designs and has features that permit more overall conversion of power when operating in conditions of light and variable winds. Moreover in conditions of high winds the robust structural design of my device allows it to operate with higher maximum wind speeds that would normally preclude operation of other designs.

The enabling technologies associated with modern electronics and automated manufacturing allow devices of my design to be mass produced at price points whereby ordinary homeowners and small electric cooperatives can afford to procure and operate them thereby bringing affordable renewable power to millions of people. Examples of prior art solution of devices that transform the kinetic energy inherent in wind in the form of mechanical rotation of a mass having some drawbacks are disclosed in GB2275970, DE3828361 and US7488150.

### SUMMARY

This invention is designed to capture the kinetic energy of the wind and convert it into kinetic energy in the form of a rotating mass. This conversion is to be done as efficiently as possible under a wide range of windspeeds and under variable wind conditions. Furthermore, this device is designed to maximize the kinetic energy of the rotating mass through mechanical means being controlled programatically using real time sensor data as input criteria. The final discriminator of this design is the selective harvest of the kinetic energy of the rotating mass through its conversion to electrical power through electromagnetic means being controlled programatically using real time sensor data as input criteria.

### DRAWINGS - BRIEF DESCRIPTION OF FIGURES

Figure 1 shows a perspective view of the apparatus.
Figure 1A shows an alternative perspective view of the apparatus.
Figure 2 shows a right side orthogonal view of the apparatus.
Figure 3 shows a left side orthogonal view of the apparatus.
Figure 4 shows a front side orthogonal view ot the apparatus.
Figure 5 shows a rear side orthogonal view of the apparatus.
Figure 6 shows top side orthogonal view of the apparatus.
Figure 7 shows a bottom side orthogonal view of the apparatus.
Figure 8 shows a perspective view of the static assembly.
Figure 9 shows a perspective view of the rotors assembly.
Figure 10 shows a perspective view of the directional windshield assembly.
Figure 11 shows a perspective view of the static assembly without generator stator subassemblies installed.
Figure 12 shows an enlarged view of the top section of the static assembly
Figure 13 shows an enlarged view of the middle section of the static assembly.
Figure 14 shows an enlarged view of the generator stator subassemblies support structure.
Figure 15 shows an enlarged view of the bottom section of the static assembly.
Figure 16A shows a perspective view of the generator stator subassemblies depicted in the installed, closed position.
Figure 16B shows a perspective view of the generator stator subassemblies depicted in the pre-installed, open position.
Figure 17 shows a perspective view of the inner rotor hub structure.
Figure 18 shows an enlarged view of the top section of the inner rotor hub structure.
Figure 19 shows an enlarged view of the middle section of the inner rotor hub structure.
Figure 20 shows an enlarged view of the bottom section of the inner rotor hub structure.
Figure 21 shows a perspective view of the inner rotors subassembly.
Figure 22 shows a perspective view of a typical mass shifter subassembly depicted with inner rotor hub connection oriented toward viewer.
Figure 23 shows an enlarged view of a typical mass shifter subassembly depicted with inner rotor hub connection end featured.
Figure 24 shows a perspective view of a typical mass shifter subassemlby depicted with outer rotor hub connection oriented toward viewer.
Figure 25 shows an enlarged partial sectional view of a typical mass shifter subassembly depicted with top half of mass shifter outer structure removed.
Figure 26 shows a perspective view of two typical mass shifter subassemblies.
Figure 27A shows a right side orthogonal sectional view of a typical mass shifter subassembly depicted with the shifting mass in the fully extended position.
Figure 27B shows a right side orthogonal sectional view of a typical mass shifter subassembly depicted with the shifting mass in the fully retracted position.
Figure 28 shows an enlarged sectional view of a typical mass shifting mechanism. Figure 29A shows an enlarged sectional view of the permanent magnet generator(PMG) actuator mechanism depicted in the disengaged position.
Figure 29B shows an enlarged sectional view of the permanent magnet generator(PMG) actuator mechanism depicted in the engaged position.
Figure 30 shows a front side orthogonal view of the inner rotor subassembly.
Figure 31A shows an enlarged view of the permanent magnet generator(PMG) actuator mechanism depicted in the disengaged position.
Figure 31B shows an enlarged view of the permanent magnet generator(PMG) actuator mechanism depicted in the engaged position.
Figure 32 shows an enlarged view of a typical electromagnetic generator(EMG) rotor mounting hub.
Figure 33 shows a perspective view of the inner rotor subassembly and the static assembly mounted together.
Figure 34A shows a partial front side orthogonal view of the inner rotor subassembly and the static assembly mounted together.
Figure 34B shows a partial front side orthogonal view of the inner rotor subassembly and the static assembly mounted together depicted with the PMG actuator mechanism in the disengaged position.
Figure 34C shows a partial front side orthogonal view of the inner rotor subassembly and the static assembly mounted together depicted with the PMG actuator mechanism in the engaged position.
Figure 35 shows an enlarged view of the power transfer/external communication sliprings and pickups.
Figure 36 shows a perspective view of the outer rotor structure depicted with mass shifter retention plates prior to installation.
Figure 37 shows a perspective view of the outer rotor structure depicted with mass shifter retention plates installed.
Figure 38 shows a perspective view of the outer rotor structure and sail support structural components.
Figure 39 shows a perspective view of the outer rotor structure and assembled sail support subassemblies.
Figure 40 shows a perspective view of the outer rotor structure with sail support subassemblies/structure installed.
Figure 41 shows a perspective view of a typical sail subassembly.
Figure 42 shows an enlarged view of a typical sail subassembly.
Figure 43 shows a perspective view of the outer rotor structure with sail support subassemblies/structure and a typical sail subassembly installed.
Figure 44 shows a perspective view of the outer rotor subassembly.
Figures 45 and 46 show a top side orthogonal view of the outer rotor subassembly depicted with and without top sail retention structures respectively. Typical sail positions shown are those when subjected to the onset of wind in the direction indicated.
Figures 47 and 48 show a bottom side orthogonal view of the outer rotor subassembly depicted with and without bottom sail retention structures respectively. Typical sail positions shown are those when subjected to the onset of wind in the direction indicated.
Figure 49A shows a front side orthogonal view depicting the mounting of the outer rotor subassembly to the inner rotor subassembly.
Figure 49B shows a perspective view of the rotors assembly and the static assembly mounted together.
Figure 50A shows a perspective view of the windshield support structure (WSS). Figure 50B shows a perspective view of the directional windshield assembly.
Figure 51 shows an enlarged view of a typical type-A junction of structural components.
Figure 52 shows an enlarged view of a typical type-B junction of structural components.
Figure 53 shows an enlarged view of the top inner hub of the windshield support structure(WSS).
Figure 54 shows an enlarged view of the anemometer subassembly.
Figure 55 shows an enlarged partial sectional view of the wind speed sensing mechanism.
Figure 56 shows an enlarged view of the top of the intake structure.
Figure 57 shows an enlarged view of the bottom inner hub or the windshield support structure(WSS).
Figure 58 shows a right side orthogonal view of the directional windshield assembly. Figure 59 shows an enlarged view of the intake structure mounting to the static assembly.
Figure 60 shows an enlarged view of the anemometer rotor subassembly installation. Figure 61 shows an enlarged view of the anemometer electrical interface sliprings and pickups.
Figure 62 shows a functional block diagram of the control module interfaces.

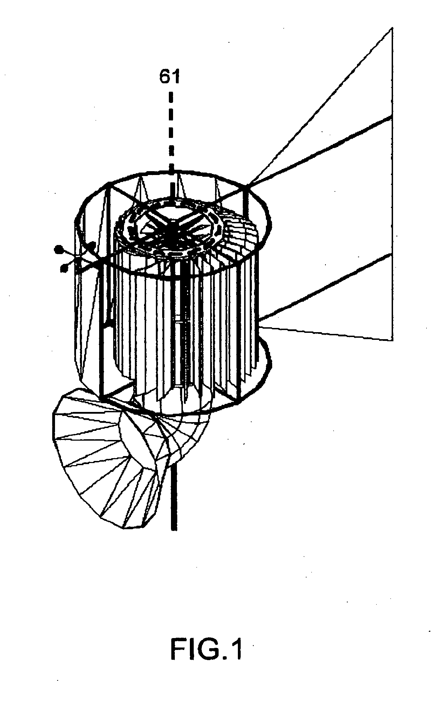

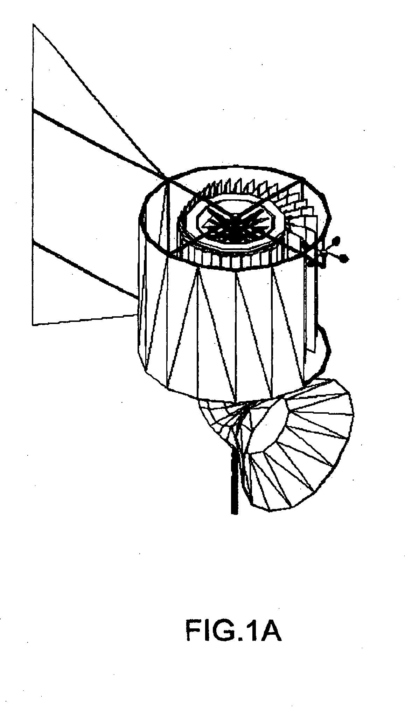

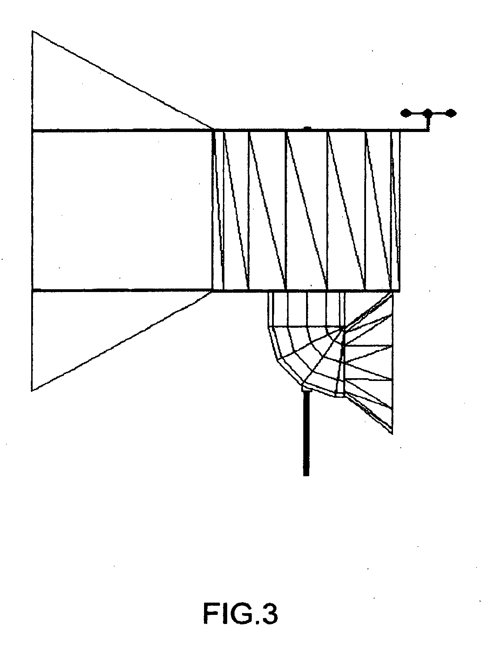

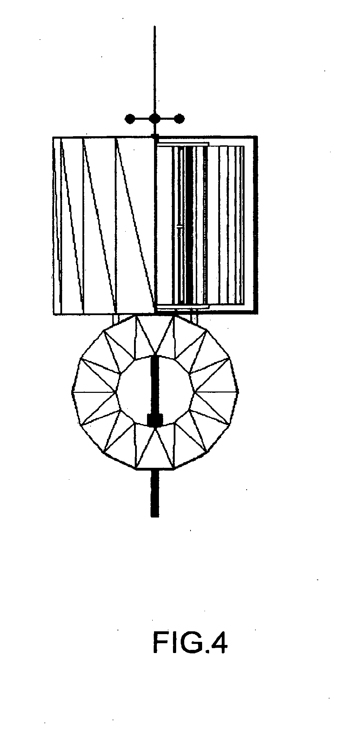

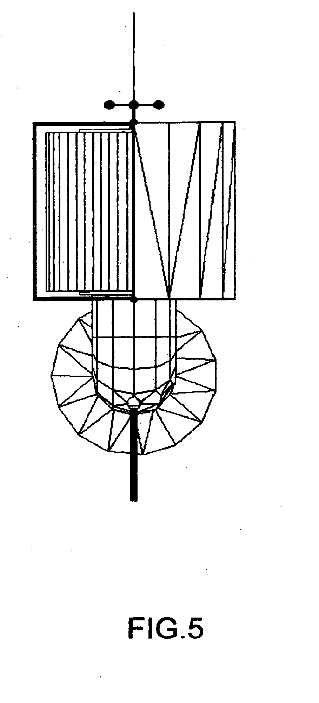

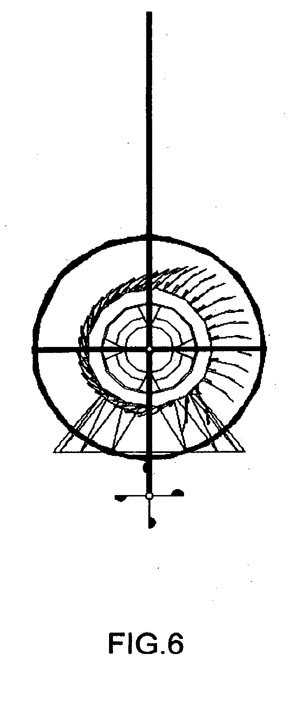

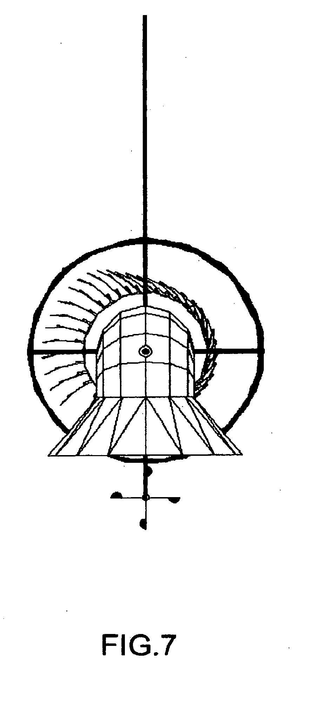

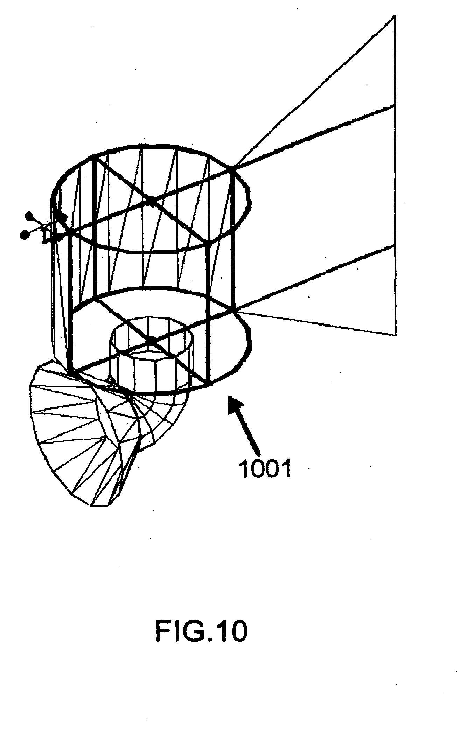

### DETAILED DESCRIPTION--FIGS. 1-44, 49A-61--PREFERRED EMBODIMENT

The description of the apparatus may best be made by detailing the three main assemblies in turn and showing their connectivity to each other as logical opportunity permits.

Figures 1 and 1A show perspective views of the apparatus.

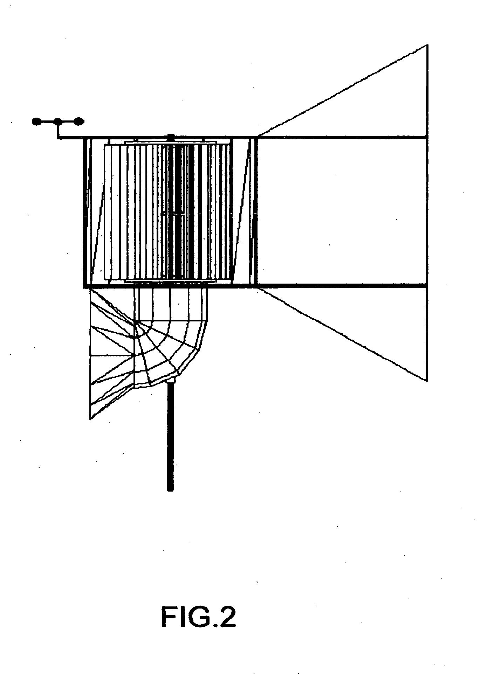

Figures 2, 3, 4, 5, 6, and 7 show right, left, front, rear, top, and bottom side orthogonal views respectively of the apparatus.

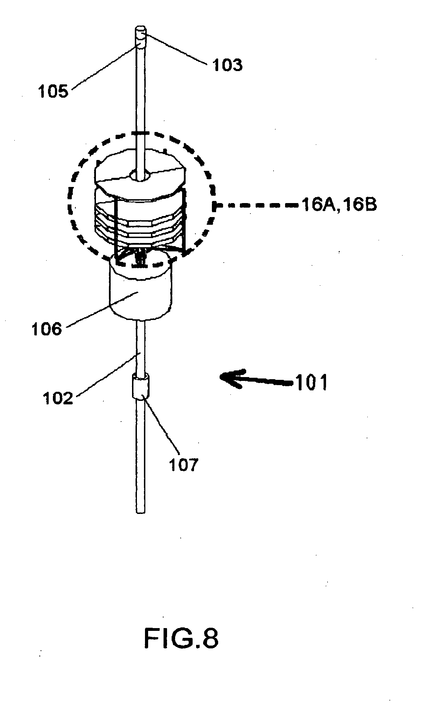

Figures 8, 9, and 10 show perspective views of the static assy. 101, rotors assy. 501, and directional windshield assy. 1001 respectively.

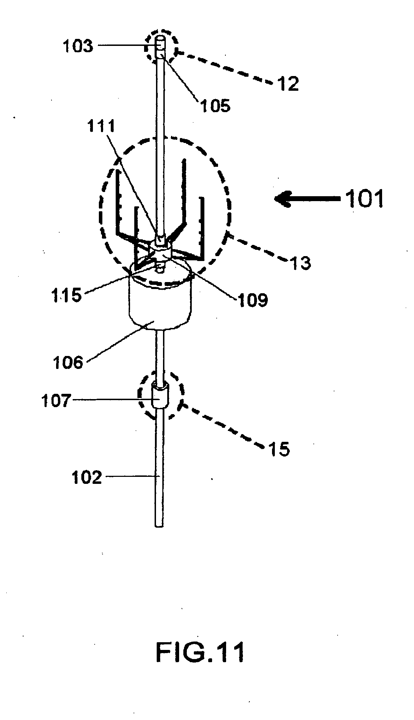

Figure 11 shows a perspective view of the static assy. 101 without generator stator subassemblies 117 and 119 installed. The subassemblies depicted in Fig. 11 are a support structure for static assy. 102, an upper bearing for directional windshield assy. 103, an upper bearing for rotors assy. 105, a lower bearing for rotors assy. 111, a generator stator support structure 109, a lower bearing for directional windshield assy. 115, a bearing for intake structure 107, and an electromagnetic generator(EMG) main DC supply 106. The EMG main DC supply 106 is comprised of electronic components capable of converting AC voltages generated by the EMG into rectified, filtered, and regulated DC voltages with all components housed within an environmentally sealed chassis.

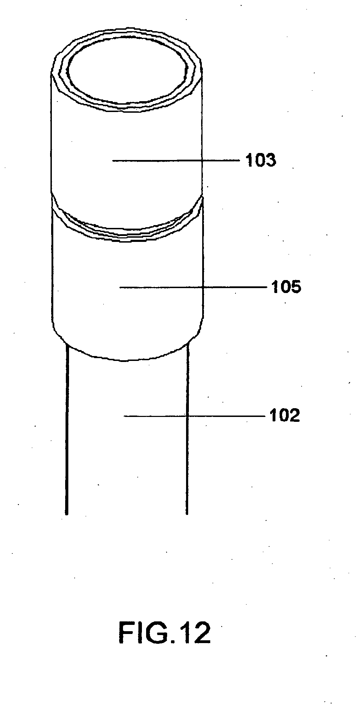

Figure 12 shows an enlarged view of the top section of static assy. 101. Support structure for static assy. 102 consists of a rigid cylindrical structure that may be solid or hollow, capable of supporting the entire apparatus with sufficient rigidity so as to preclude any inordinate twisting or swaying when subjected to horizontal winds with a maximum velocity of 75 miles per hour. Both upper bearing for directional windshield assy. 103 and upper bearing for rotors assy. 105 are shown in detail. Both of these bearings are comprised of inner and outer race components where the inner races are attached to support structure for static assy. 102 with screws (not shown). The outer races are free to rotate coencentrically about the longitudinal axis of support structure for static assy. 102.

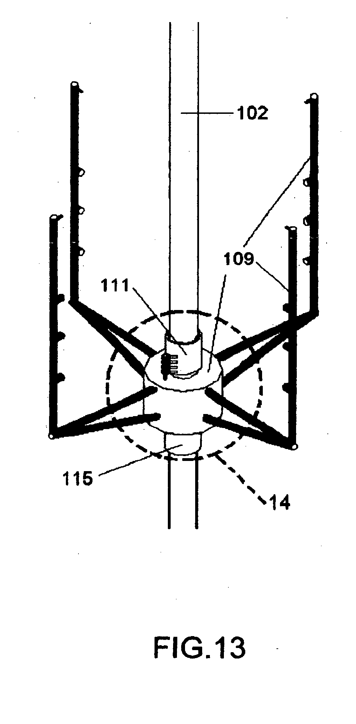

Figure 13 shows an enlarged view of the middle section of static assy. 101 without generator stator subassemblies 117 and 119 installed. Generator stator support structure 109 is comprised of a central cylindrical hub with four horizontal beams emanating from it at 90 degree points of its circumference. In addtion to these four beams there are another four beams that emanate from the hub slightly lower down vertically from the aforementioned horizontal beams. These four beams extend outward and upwards to connect with the ends of the horizontal beams to form a structure more able to carry vertical loads. Emanating from the outer ends of the horizontal beams are verticle beams that have a series of horizontal mounting stubs extending inwards toward support structure for static assy. 102. Generator stator structure 109 is solid in structure and monolithic in composition and secured to support structure for static assy. 102 with screws (not shown). Both generator stator support structure 109 and support structure for static assy. 102 are immobile.

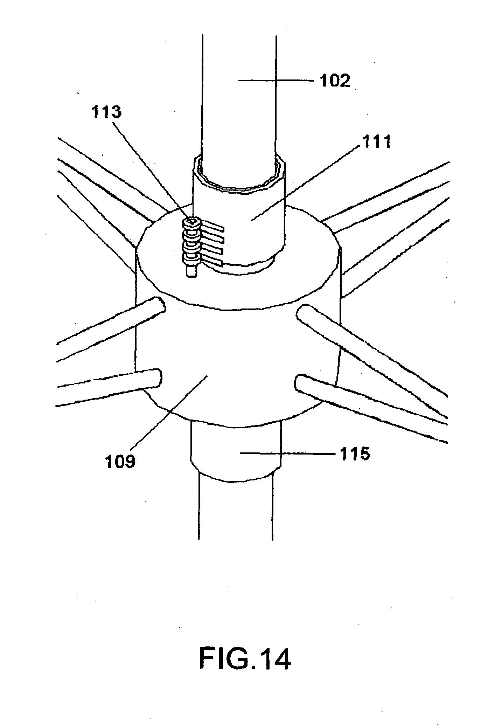

Figure 14 shows an enlarged view focusing on the subassemblies mounted on or near generator stator support structure 109. Both lower bearing for rotors assy. 111 and lower bearing for directional windshield assy. 115 are shown in detail. Both bearings consist of inner and outer race components where the inner races are attached to support structure for static assy. 102 with screws (not shown). A power transfer/external communication pickups subassy. 113 is comprised of a plurality of metallic strips connected to a vertical mounting mast with screws (not shown) and wound around the circumference of the mast in such a manner so as to form tightly wound coils with the free ends of the wound strips having an innate spring force inward toward the outer circumferential surface of lower bearing for rotors assy. 111. The composition of the mounting mast is of a material electrically insular in nature with the mast being mounted into a receptive hole in the top of the cylindrical hub of generator stator support structure 109. The mounting mast of power transfer/external communications pickups subassy. 113 is secured to generator stator support structure 109 with a suitable adhesive.

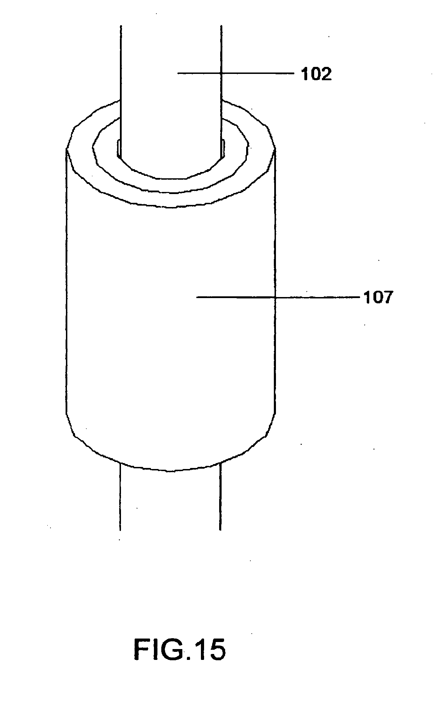

Figure 15 shows an enlarged view of the bottom of static assy. 101. The bearing for intake structure 107 is shown in detail. The bearing is comprised of inner and outer race components where the inner race is attached to support structure for static assy. 102 with screws (not shown). The outer race is free to rotate coencentrically about the longitudinal axis of support structure for static assy. 102.

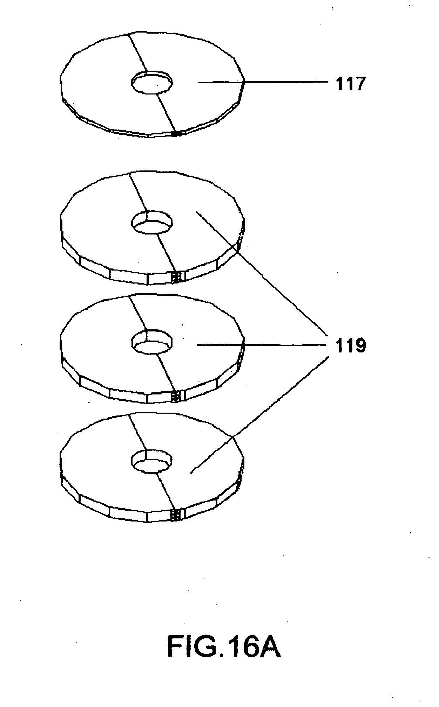

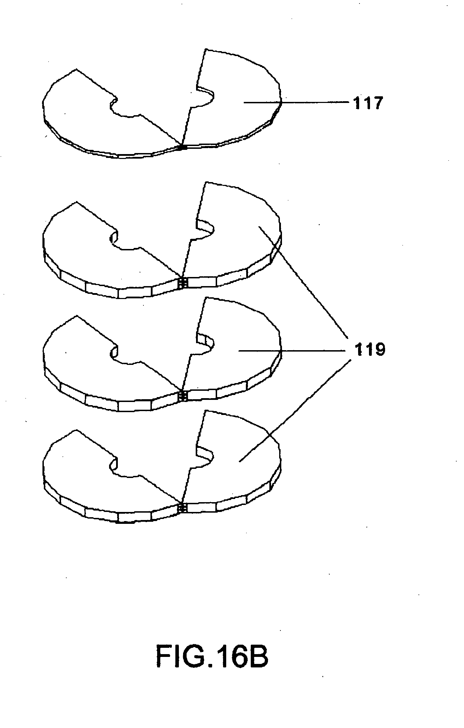

Figure 16A shows a perspective view of permanent magnet generator(PMG) stator subassembly 117 and electromagnetic generator (EMG) stator subassembly 119. Figure 16A shows the pre-installation of these stator subassemblies. Both permanent magnet generator(PMG) stator subassy. 117 and electromagnetic generator(EMG) stator subassembly 119 consist structurally of two halves that are connected together by a hinge (not referenced) and are secured furthermore in the closed circular configuration by means of screws (not shown). Figure 16B shows permanent magnet generator(PMG) stator subassembly 117 and electromagnetic generator (EMG) stator subassembly 119 in the closed position. The two configurations are necessary due to nature of the assembly of the apparatus that requires these two stator subassemblies to be installed after other subassemblies. The permanent magnet generator stator subassembly 117 is composed of individual permanent magnets housed within a non-ferromagnetic substrate shaped into a disk. Because of the variety of conventional designs for permanent magnet generators, each based upon specific applications, the size, number, and orientation of the individual magnets are not addressed within this specification. The only requirement is that the magnets contained within permanent magnet generator(PMG) stator subassembly 117 create magnetic fields which will induce electrical currents in windings of conductive wire contained within a structure placed in close proximity to and moving with some relative velocity with respect to the stator. The permanent magnet generator(PMG) stator subassembly 117 is mounted to the topmost set of horizontal mounting stubs of generator stator support structure 109 using screws (not shown). The electromagnetic generator(EMG) stator subassembly 119 is composed of individual coils of conductive wire housed within a substrate of non-conductive material shaped into a disk. Because of the variety of conventional designs of electromagnetic generators, each based upon specific applications, the size, number, and orientation of the individual coils are not addressed within this specification. The only requirement is that an electrical current be induced within these coils when they are in close proximity to a source of magnetic field that is moving with some relative velocity with respect to these coils. A plurality (three in this example) of electromagnetic generator(EMG) stator subassemblies 119 are mounted to generator stator support structure 109 at the three lower sets of horizontal mounting stubs using screws (not shown).

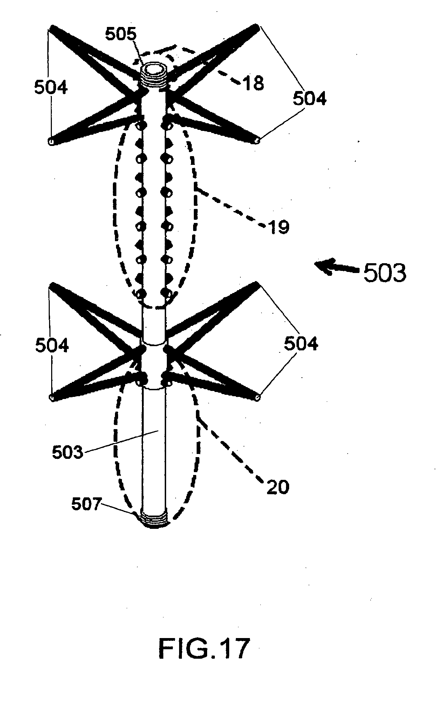

Figure 17 shows a perspective view of inner rotor hub structure 503. The inner rotor hub structure 503 is composed of a single piece of non-conductive material with conductive anemometer electrical interface sliprings 505 and power transfer/ external communication sliprings 507 mounted to the top and bottom of the structure respectively with suitable adhesive. The inner rotor hub structure 503 has two sets of four horizontal beams emanating from the hub structure at 90 degree points of its outer circumference. In addition to these two sets of beams, there are another two sets of beams emanating from the hub structure slightly lower down and extending outward and upward to connect with the ends of the aforementioned horizontal beams to form structures better able to carry vertical loads. At the ends of all the aforementioned horizontal beams there are holes drilled to accept screws (not shown). These points are identified as inner rotor-to-outer rotor connection points 504. At its core inner rotor hub structure 503 is comprised of a hollow cylinder whose inside diameter allows for coencentric mounting of inner rotor hub structure 503 around the outside diameter of support structure for static assembly 102.

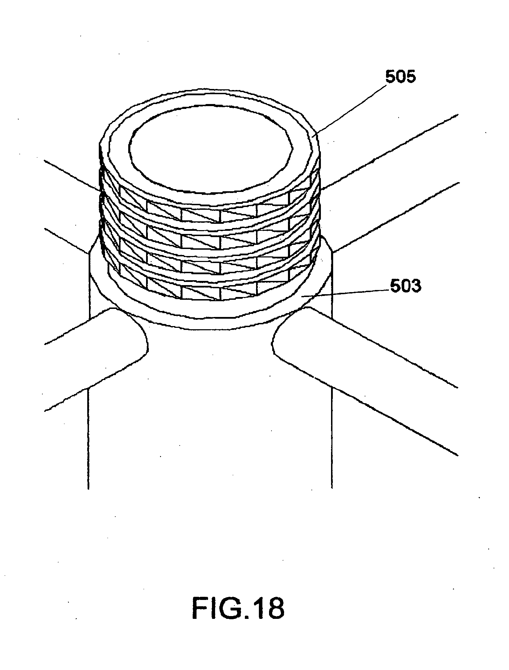

Figure 18 shows an enlarged view of the top section of inner rotor hub structure 503. This view details anemometer electrical interface sliprings 505.

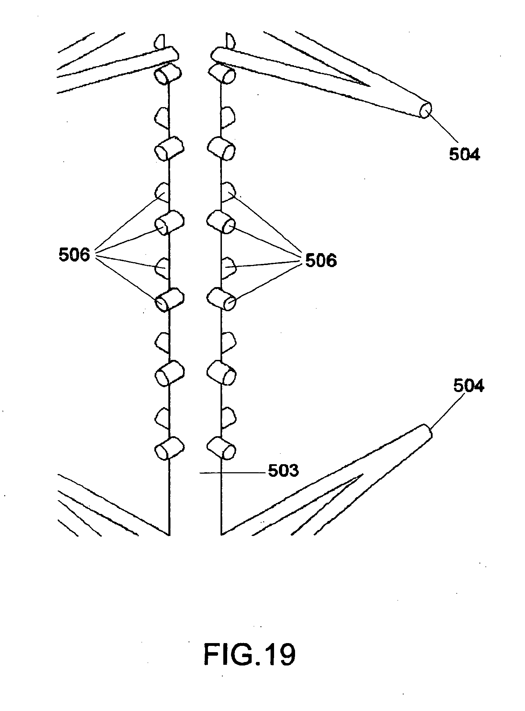

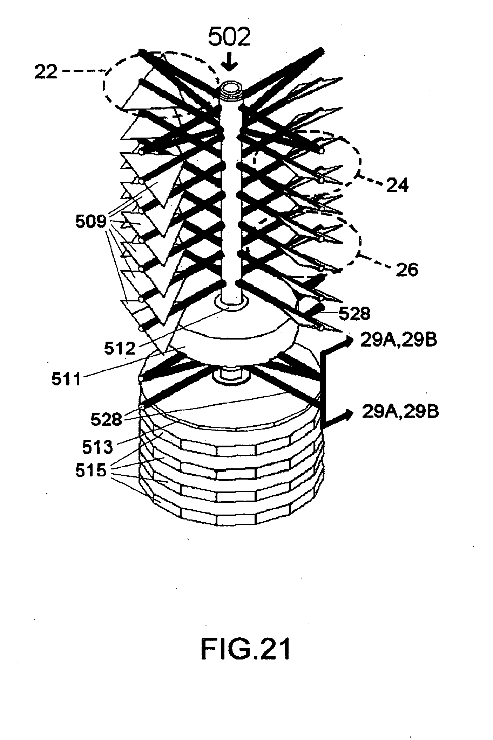

Figure 19 shows an enlarged view of the middle section of inner rotor hub structure 503. This view details the plurality (24 in this example) of mass shifter connection receptacles 506. The typical mass shifter connection receptacle 506 is formed into a hollow horizontal cylinder that will accept and secure one end of a mass shifter subassembly (Fig.21,Ref.509).

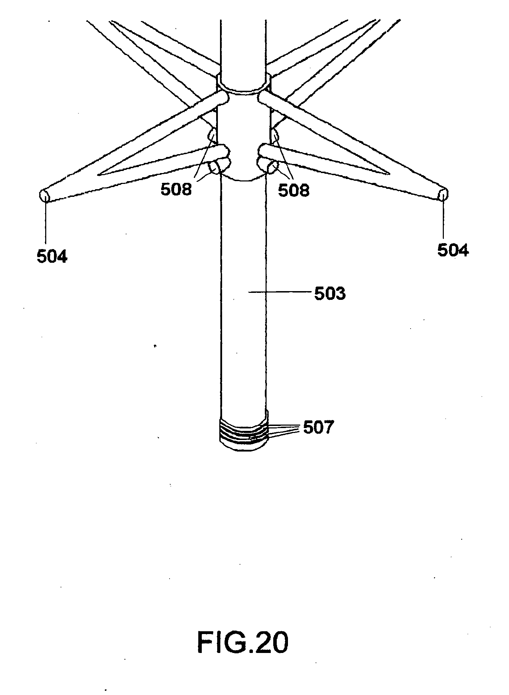

Figure 20 shows an enlarged view of the bottom section of inner rotor hub structure 503. This view details power transfer/external communication sliprings 507 and the plurality (four in this example) of PMG actuator flyweight housing connection receptacles 508. The typical PMG actuator flyweight housing connection receptacle 508 is formed into a hollow horizontal cylinder that will accept and secure one end of a PMG actuator flyweight housing (Fig.21 ,Ref.528).

Figure 21 shows a perspective view of inner rotor subassembly 502. This view details a plurality (24 in this example) of mass shifter subassemblies 509, a control module 511, a PMG rotor subassembly 513, a plurality (four in this example, three are shown in view) of PMG actuator flyweight housings 528, and a plurality (four in this example) of EMG rotor subassemblies 515. Mass shifter subassemblies 509 are mounted to inner rotor hub structure 503 through insertion into mass shifter connection receptacles (Fig.19,Ref.506). Control module 511 is comprised of electrical components mounted within an environmentally sealed chassis. The bottom of control module 511 has channels which allow it to conform to the lower set of horizontal support beams of inner rotor hub structure 503. The top of control module 511 is secured to inner rotor hub structure 503 with control module mounting collar 512 and screws (not shown). PMG rotor subassembly 513 is composed of individual coils of conductive wire housed within a substrate of non-conductive material shaped into a conductive wire housed within a substrate of non-conductive material shaped into a disk. Because of the variety of conventional designs for permanent magnet generators, each based upon specific applications, the size, number, and orientation of the individual coils are not addressed within this specification. The only requirement is that an electrical current be induced in these coils when they are in close proximity to a source of magnetic field and have some relative velocity with respect to this magnetic field. EMG rotor subassemblies 515 are composed of individual electromagnets housed within a non-conductive, non-ferromagnetic substrate shaped into a disk. Because of the variety of conventional designs for electromagnetic generators, each based upon specific applications, the size, number, and orientation of the individual electromagnets are not addressed within this specification. The only requirement is that the electromagnets contained within the EMG rotor subassemblies 515 create magnetic fields which will induce electrical currents in windings of conductive wire contained within a structure placed in close proximity to and having some relative velocity with respect to the magnetic fields created.

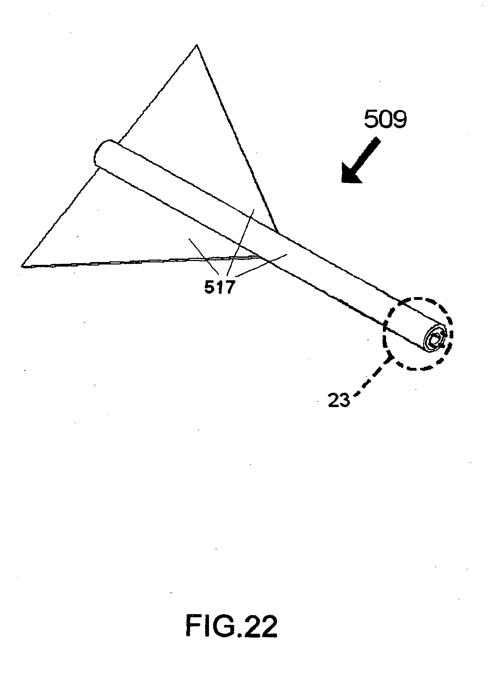

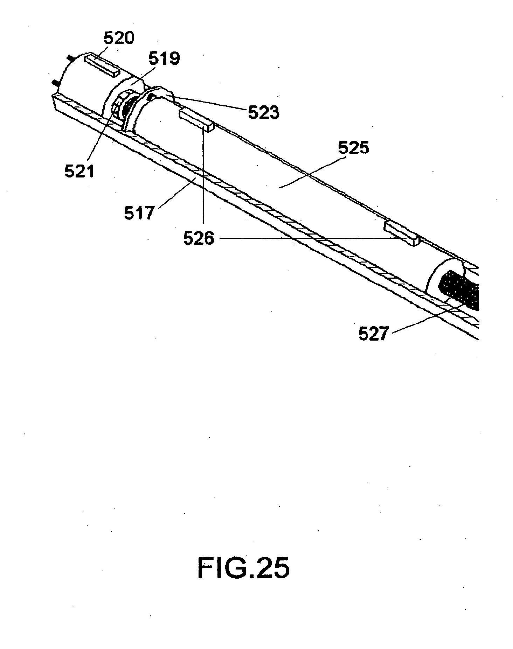

Figure 22 shows a perspective view of a typical mass shifter subassembly 509, with inner rotor hub connection end featured. This view details a mass shifter outer structure 517, mass shifter outer structure guide channels 518, a mass shifter motor housing(stator) 519, a mass shifter motor rotor 521, and mass shifter electrical interface pins 522. Mass shifter electrical interface pins 522 facilitate the extension of power to mass shifter motor housing(stator) 519 as well as a conduit for an electrical signal between mass shifter home position detection component (Fig.25, Ref.523) and control module (Fig.21,Ref.511)

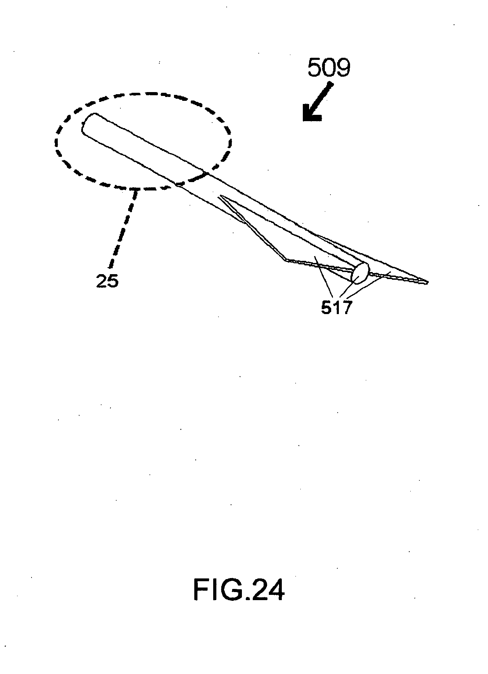

Figure 24 shows a perspective view of a typical mass shifter subassembly 509 with outer rotor hub connection oriented toward viewer.

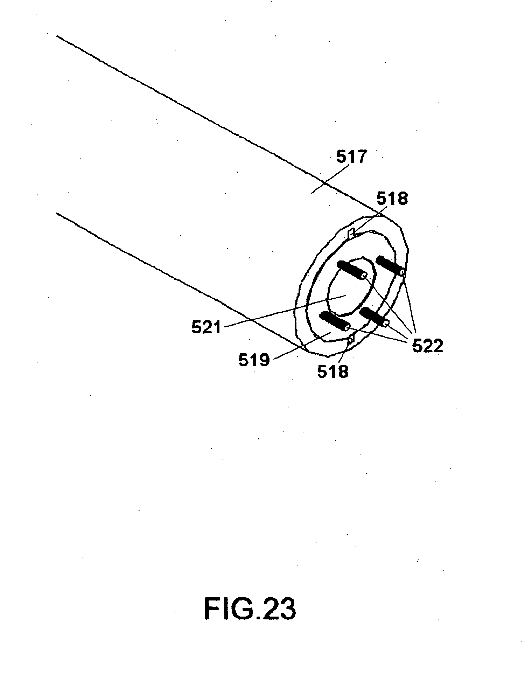

Figure 25 shows an enlarged partial sectional view of a typical mass shifter subassembly 509. The top half of mass shifter outer structure 517 has been removed in this view in order to detail the internal components. This view details mass shifter motor housing(stator) 519, mass shifter motor housing guide key 520, mass shifter motor rotor 521, a shifting mass home position detector 523, a shifting mass 525, shifting mass guide keys 526, and a mass shifter drive shaft 527. Mass shifter motor housing(stator) 519 and mass shifter motor rotor 521 together form a simple direct current motor. The motor is inserted into mass shifter outer structure 517 with guide key 520 meshing into mass shifter outer structure guide channel (Fig.23,Ref.518). The motor housing is held in place using a suitable adhesive. Mass shifter drive shaft 527 is connected to mass shifter motor rotor 521 using set screws (not shown). Mass shifter drive shaft 527 is a threaded rod that is supported on one end by connection to mass shifter motor rotor 521 and supported on the other end by being threaded through the hollow cylindrical shifting mass 525. Shifting mass 525 is composed of a dense material, such as lead, that is shaped into a hollow cylinder with end caps having threaded holes of the same diameter and thread pitch as mass shifter drive shaft 527. Shifting mass 525 is threaded onto mass shifter drive shaft 527 with shifting mass guide keys 526 meshing into mass shifter outer structure guide channel (Fig.23,Ref.518). Shifting mass home position detector is composed of a non-conductive material shaped into a disk with the outside diameter being inserted into a channel cut into and extending around the inner circumference of mass shifter outer structure 517 and held in place with a suitable adhesive. Shifting mass home position detector 523 has a hole in the center of its disk to allow for clearance of mass shifter drive shaft 527. Mounted on the side of shifting mass home position detector 523 nearest shifting mass 525 are two metallic switch contacts that facilitate a closed electrical circuit path when a metallic end cap of shifting mass 525 makes simultaneous contact with both.

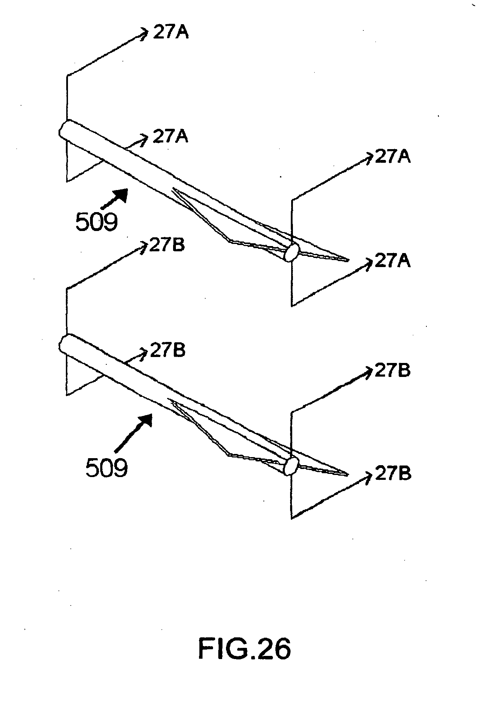

Figure 26 shows a perspective view of two typical mass shifter subassemblies 509.

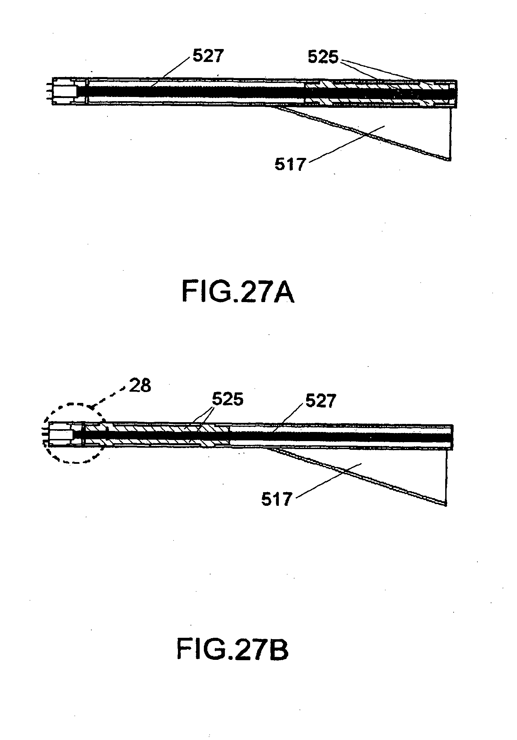

Figure 27A shows a right side orthogonal sectional view of a typical mass shifter subassembly 509 detailing a view of shifting mass 525 in the fully extended position along the longitudinal axis of mass shifter drive shaft 527.

Figure 27B shows a right side orthogonal sectional view of a typical mass shifter subassembly 509 detailing a view of shifting mass 525 in the fully retracted position along the longitudinal axis of mass shifter drive shaft 527.

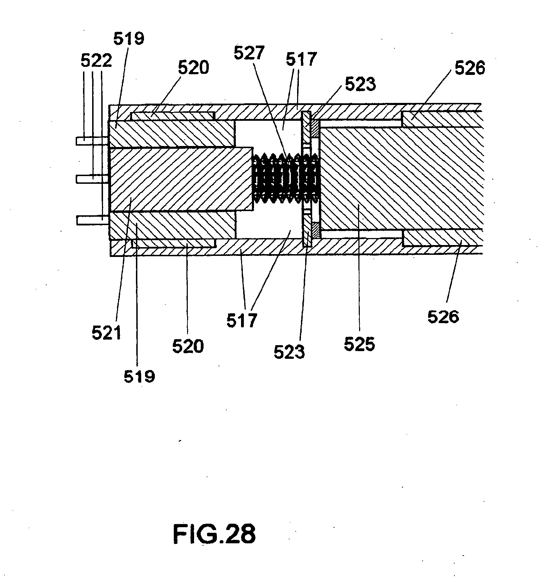

Figure 28 shows an enlarged sectional view of the mass shifting mechanism of a typical mass shifter subassembly 509. This view details mass shifter outer structure 517, mass shifter motor housing(stator) 519, mass shifter motor housing guide keys 520, mass shifter motor rotor 521, mass shifter electrical interface pins 522, shifting mass home position detector 523, shifting mass guide keys 536, and mass shifter drive shaft 527.

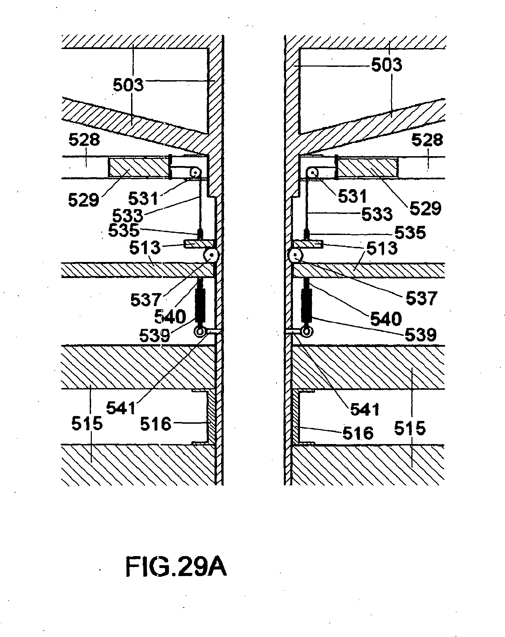

Figure 29A shows a front side orthogonal enlarged sectional view of the permanent magnet generator(PMG) actuator mechanism in the disengaged position. Because of the inherent symmetry of the configuration of inner rotor subassembly 502, this same depiction could serve as the right, rear, or left side orthogonal enlarged sectional view as well. This view introduces the details of the plurality (4 in this example, 2 are shown in view) of the following components, PMG actuator flyweight housings 528, PMG actuator flyweights 529, PMG actuator flyweight stops 530, PMG actuator flyweight pulleys 531, PMG actuator drive cables 533, PMG actuator drive cable-to-rotor attachment rings 535, PMG actuator radial alignment wheels 537, PMG actuator disengagment springs 539, PMG actuator rotor-to-disengagement spring attachment rings 540, and PMG actuator disengagement spring-to-inner rotor hub attachment rings 541.

A typical PMG actuator flyweight housing 528 is composed of any rigid material formed into a hollow cylinder with a closed bulkhead near one end. A hole is drilled through this bulkhead to form the structure identified as PMG actuator flyweight stop 530. The PMG actuator flyweight cable 533 passes through the hole afforded in the PMG actuator flyweight stop 530. A typical PMG actuator flyweight 529 is composed of a dense material, such as lead, that is formed into a solid cylindrical shape whose outside diameter is such so as to allow unimpeded movement along the longitudinal axis of and inside a typical PMG flyweight housing 528. A typical PMG actuator flyweight pulley 531 is composed of a material that will resist erosion of its circumferential surface and shaped so that it affords a "V" shaped surface on its circumferential face to allow correct tracking of PMG drive cable 533. A typical PMG actuator pulley 531 revolves around an axle whose ends are inserted into the inner wall of PMG actuator flyweight housing 528. A typical PMG actuator drive cable 533 is composed of a non-elastic material and is used to connect PMG actuator flyweight 529 to PMG actuator drive cable-to-rotor attachment ring 535. PMG actuator drive cable-to-rotor attachment ring 535 is composed of an eyebolt type component whose mounting shaft is screwed into the substrate on the top of PMG rotor 513. A typical PMG actuator rotor-to-disengagement spring attachment ring 540 is composed of an eyebolt type component whose mounting shaft is screwed into the substrate on the bottom of PMG rotor 513. A typical PMG actuator disengagement spring 539 is connected between a typical rotor-to-disengagement ring 540 and a typical PMG actuator disengagement spring-to-rotor hub attachment ring 541. A typical PMG actuator disengagement spring-to-rotor hub attachment ring 541 is composed of an eyebolt type component whose mounting shaft is screwed into the substrate of inner rotor hub structure 503.

A more detailed examination of PMG rotor subassembly 513 reveals that it is comprised of three formations. PMG rotor subassembly 513 has an aforementioned main disklike structure with a hole in the center and emanating vertically from the inside diameter of the main disk is a hollow cylinder with a smaller disklike structure mounted to the top of it. The entire PMG rotor subassembly 513 encircles inner rotor hub structure 503. The inside diameter of PMG rotor subassebmly 513 is such so as to allow clearance of inner rotor hub structure 503 in order to allow unimpeded movement up and down along the longitudinal axis of inner hub structure 503. Fitted at 90 degree points of the outer circumference of the small cylinder structrure of PMG rotor subassembly 513 are PMG rotor radial alignment wheels 537. The wheels are composed of an electrically conductive metal and are fitted so that their axles are secured within the walls of the small cylinder structure of PMG rotor subassembly 513. The diameter of PMG radial alignment wheels 537 are such so as to allow penetration into channels cut into the substrate of inner rotor hub structure 503 with the intent to limit radial movement between PMG rotor subassembly 513 relative to inner rotor hub structure 503, irregardless of the position of PMG rotor subassembly 513 along the longitudinal axis of inner rotor hub structure 503.

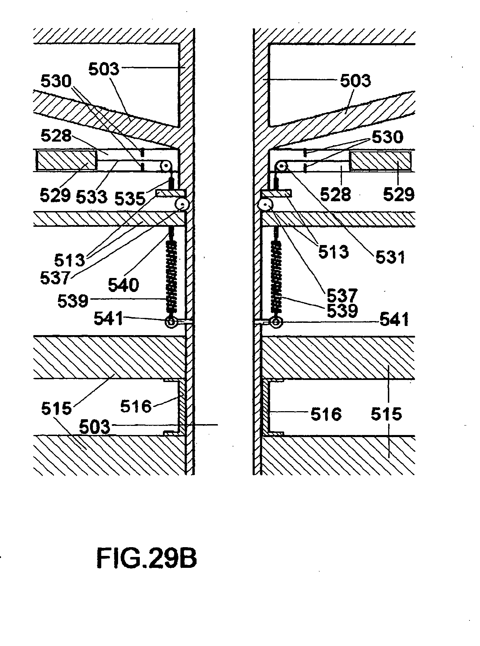

The channels in which PMG radial alignment wheels 537 travel are composed of electrically conductive metal inlaid into the substrate of inner rotor hub structure 503. The travel of PMG rotor subassembly 513 along the longitudinal axis of inner rotor hub structure 503 is limited in the lower (disengaged) position by PMG actuator flyweight stop 530. The travel of PMG rotor subassembly 513 along the longitudinal axis of inner rotor hub structure 503 is limited in the upper (engaged) position by the top of PMG rotor subassembly 513 contacting the larger diameter superstructure of inner rotor hub structure 503 as shown on Fig. 29B.

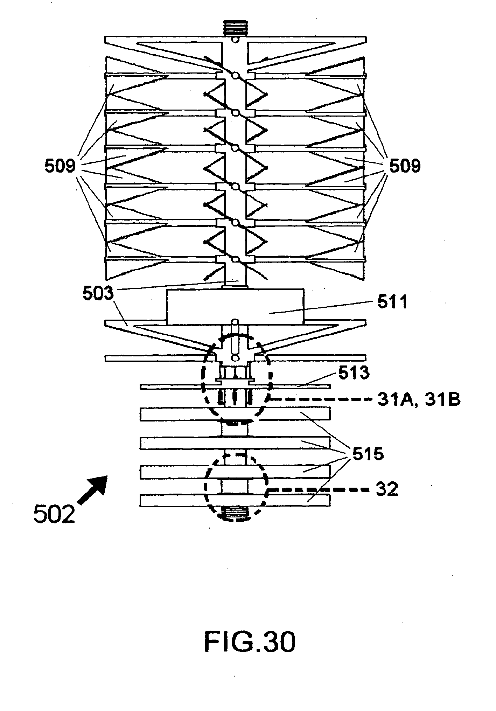

Figure 30 shows a front side orthogonal view of inner rotor subassembly 502.

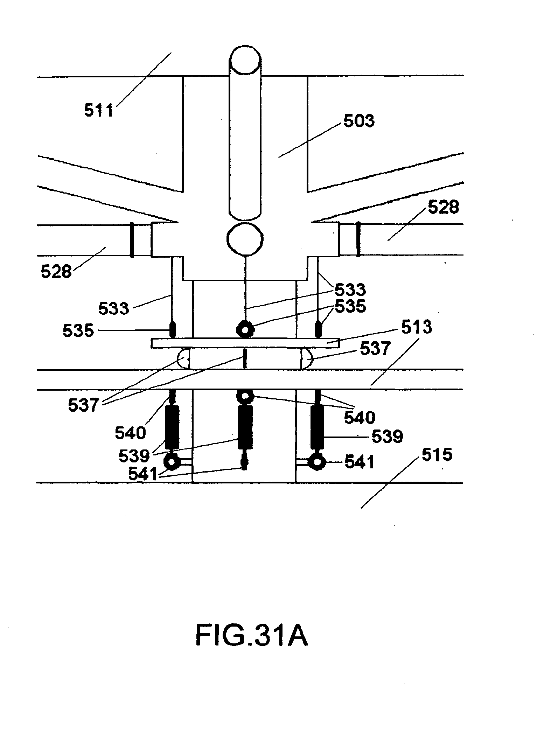

Figure 31A shows an enlarged view of PMG actuator mechanism shown in the disengaged position.

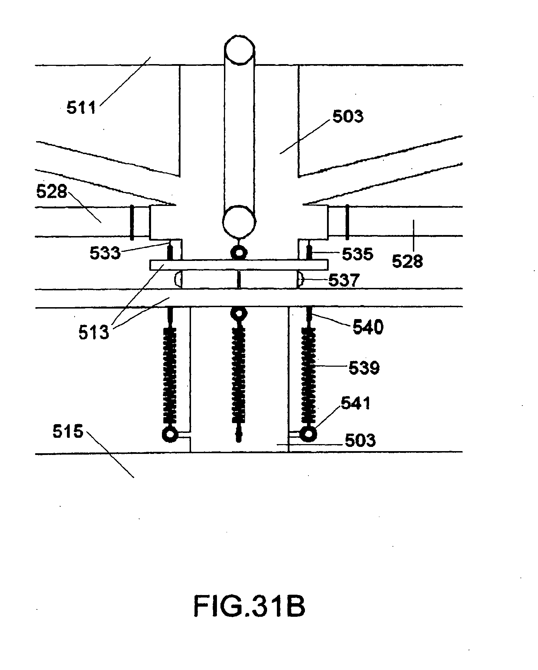

Figure 31B shows an enlarged view of the PMG actuator mechanism shown in the engaged position.

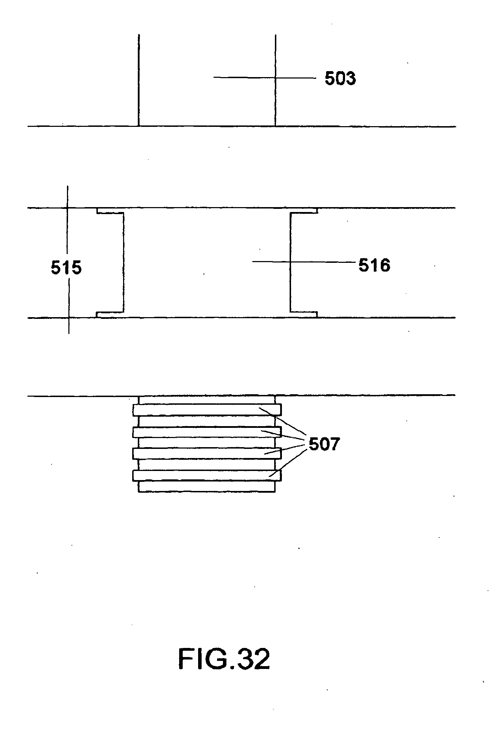

Figure 32 shows an enlarged view of the bottom section of inner rotor subassembly 502. This view details a typical electromagnetic(EMG) rotor mounting hub 516. A typical EMG mounting hub 516 is composed of a rigid material and serves to connect two EMG rotor subassemblies 515 to inner rotor hub structure 503 using screws (not shown).

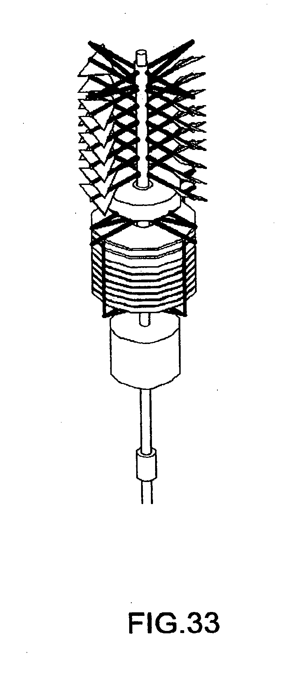

Figure 33 shows a perspective view of inner rotor subassembly 502 and static assembly 101 mounted together. The top and bottom of inner rotor hub structure 503 are connected to upper bearing for rotors subassembly 105 and lower bearing for rotors subassembly 111 respectively with screws (not shown).

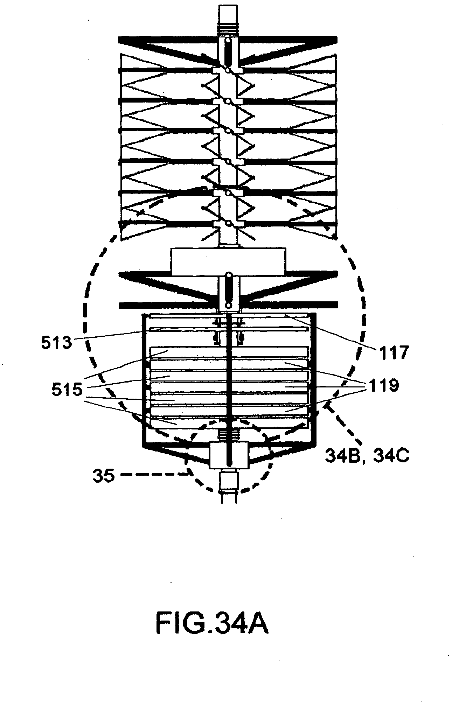

Figure 34A shows a front side orthogonal view of inner rotor subassembly 502 and static assembly 101 mounted together.

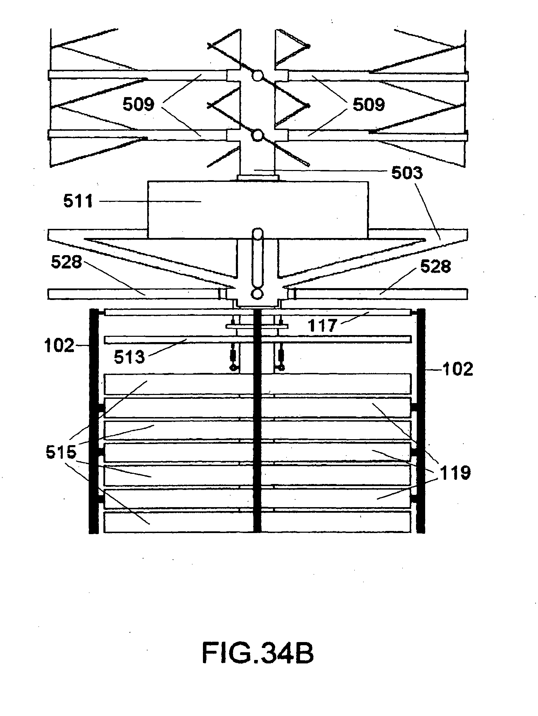

Figure 34B shows an enlarged view depicting the physical positional relationship between PMG rotor subassembly 513 and PMG stator subassembly 117 when the PMG actuator mechanism is in the disengaged position.

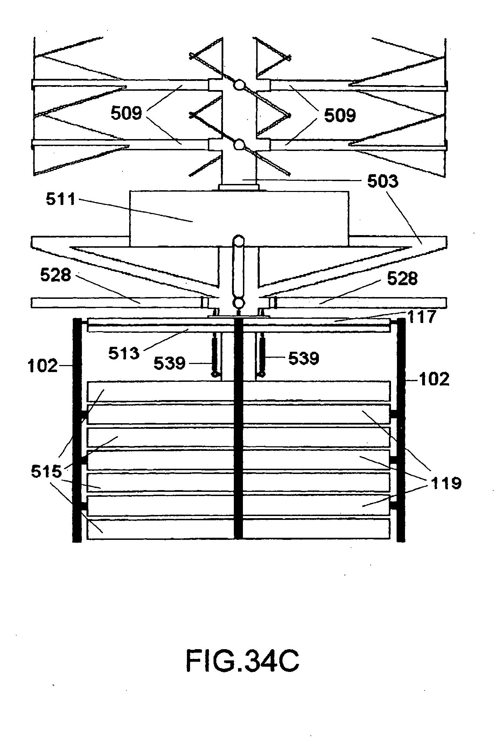

Figure 34C shows an enlarged view depicting the physical positional relationship between PMG rotor subassembly 513 and PMG stator subassembly 117 when the PMG actuator mechanism is in the engaged position.

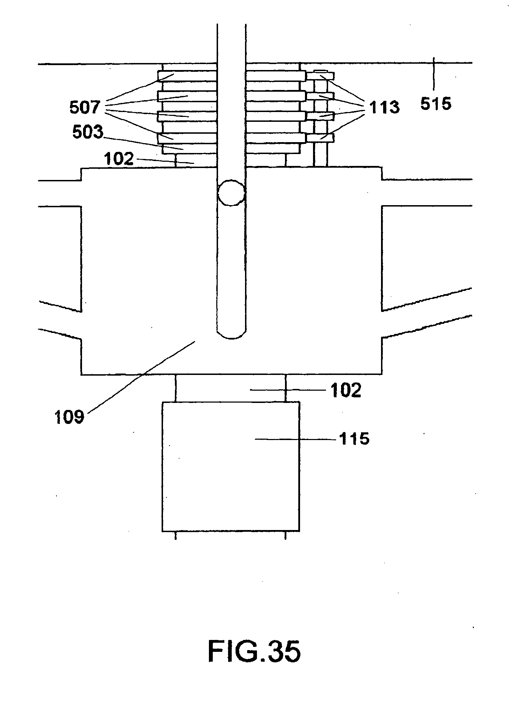

Figure 35 shows an enlarged view featuring power transfer/external communication sliprings 507 and power transfer/external communication pickups subassembly 113.

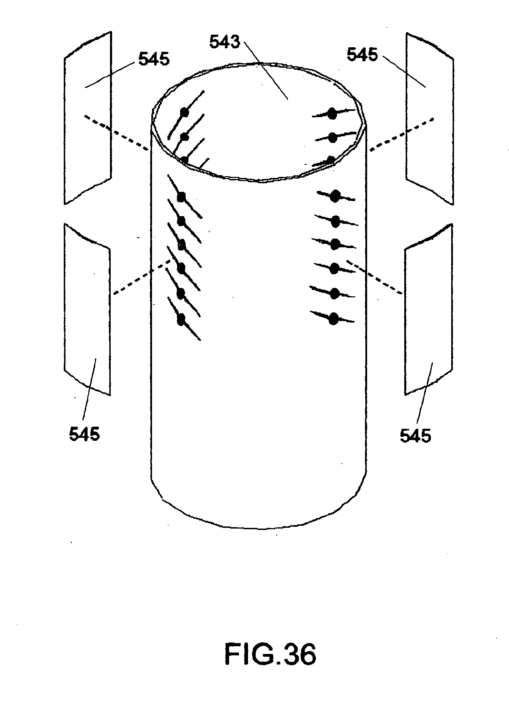

Figure 36 shows a perspective view of outer rotor structure 543 and the installation details of mass shifter subassembly retention plates 545. Outer rotor structure 543 is composed of a rigid material formed into a hollow cylinder. Outer rotor structure 543 has a plurality (24 in this example) of voids formed in columns spaced at 90 degree points of its outer circumference. The dimensions of the voids in outer rotor structure 543 are such so as to allow insertion of the outer ends of mass shifter subassemblies (Fig.21,Ref.509) through outer rotor structure 543. Mass shifter subassembly retention plates 545 are composed of rigid material formed into plates having an inner surface with the same curvature as the outer circumference of outer rotor structure 543.

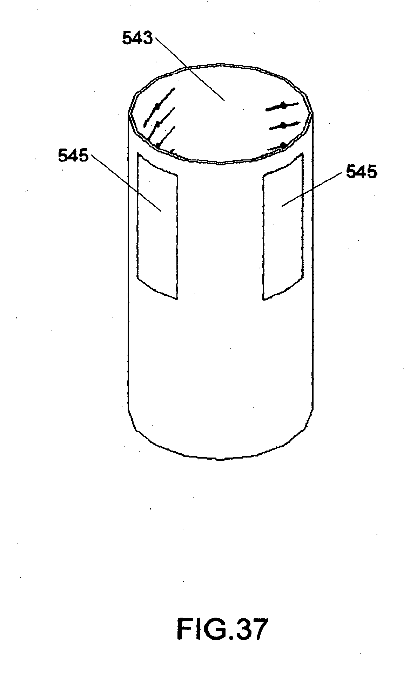

Figure 37 shows a perspective view of outer rotor structure 543 with mass shifter subassembly retention plates 545 installed. Mass shifter subassembly retention plates are secured to outer rotor structure 543 with screws (not shown).

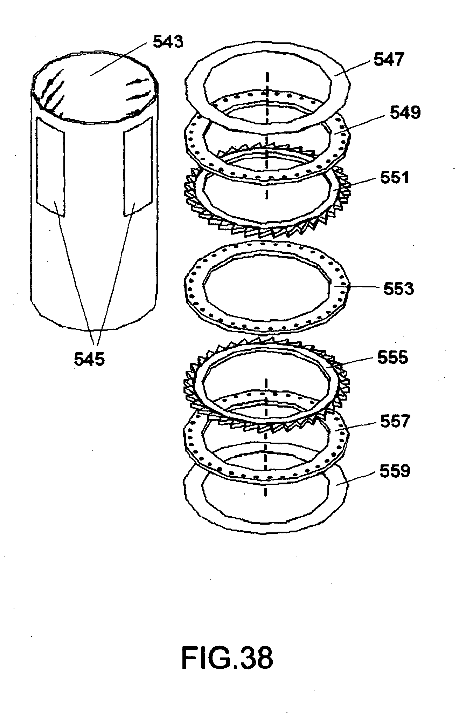

Figure 38 shows a perspective view of outer rotor structure 543 and sail support structural components. Introduced in this view are the components that comprise the sail support and retention structures to include a top longitudinal sail retention structure 547, a top radial sail retention structure 549, a top sail drive structure 551, a middle sail retention structure 553, a bottom sail drive structure 555, a bottom radial sail retention structure 557, and a bottom longitudinal sail retention structure 559. The top and bottom sail retention structures (547 and 559 respectively) are composed of a rigid material shaped into rings. The top, middle, and bottom sail retention structures (549, 553, and 557 respectively) are composed of a rigid material shaped into rings with a plurality (36 in this example) of holes drilled through each structure along the middle circumference of each structure. The top and bottom sail drive structures (551 and 555 respectively) are composed of a rigid material shaped into rings with outer circumference comprised of triangular-like features similar to those of a typical gear.

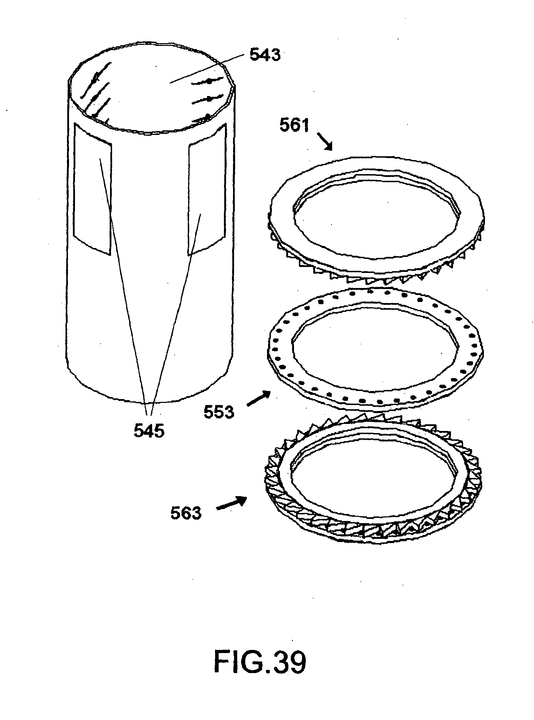

Figure 39 shows a perspective view of outer rotor structure 543 and top sail suport subassembly 561, middle sail retention structure 553, and bottom sail support subassembly 563. Top sail support subassembly 561 is formed by attaching top longitudinal sail retention structure 547, top sail drive structure 551 and top radial longitudinal sail retention structure 547, top radial sail retention structure 549, and top sail drive structure 551 together using screws (not shown). Bottom sail support subassembly 563 is formed by attaching bottom longitudinal sail retention structure 559, bottom radial sail retention structure 557, and bottom sail drive structure 555 together using screws (not shown).

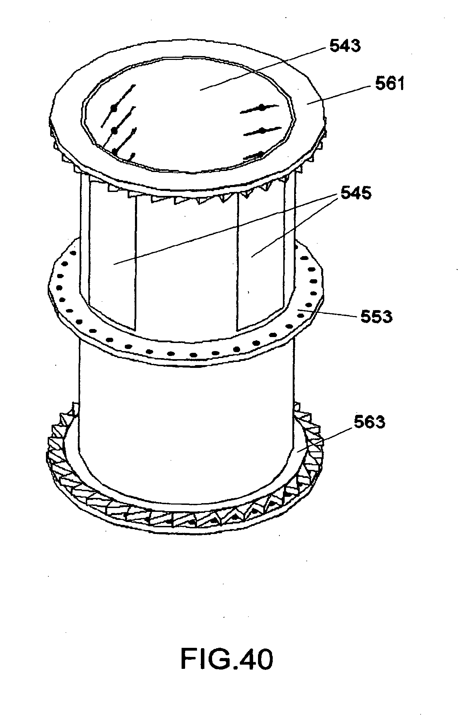

Figure 40 shows a perspective view of outer rotor structure 543 with top sail support subassembly 561, middle sail retention structure 553, and bottom sail support subassembly 563 attached as shown using screws (not shown).

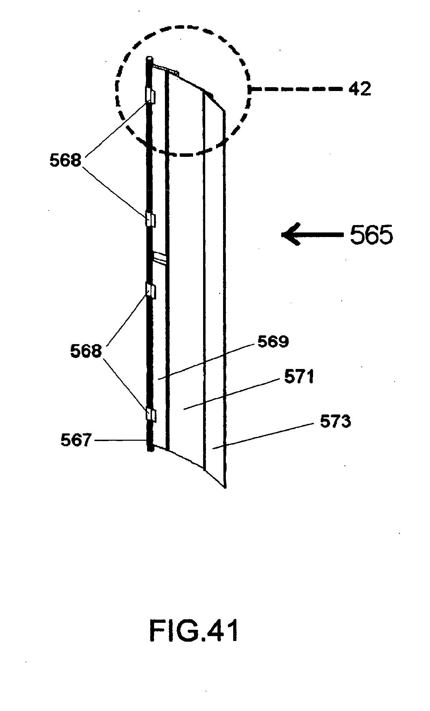

Figure 41 shows a perspective view of a typical sail subassembly 565. The components that make up a typical sail subassembly 565 include a pivoting mast structure 567, an inner sail structure 569, a plurality (four in this example) of mast-to-sail connecting brackets 568, a middle sail structure 571, and an outer sail structure 573. Pivoting mast structure 567 is composed of any rigid material formed into a rod that is connected to inner sail structure 569 using mast-to-sail connecting brackets 568 and screws (not shown). Inner, middle, and outer sail structures (569, 571, and 573 respectively) are composed of a rigid material shaped into slats. Inner sail structure 569 should be thicker (by a multiple of three in this example) than middle and outer sail structures (571 and 573 respectively). The length of a pivoting mast structure 567 is equal to the length of outer rotor structure (Fig.,Ref.543) minus some distance to allow for clearance to operate. In this example, the distance for clearance is equal to four times the thickness of top longitudinal sail retention structure (Fig.,Ref.547). The diameter of pivoting mast structure 567 is to be slightly less than that of the holes found in top, middle, and bottom radial sail retention structures (Fig.,Refs. 549, 553, and 557 respectively) to allow clearance to rotate freely within the holes.

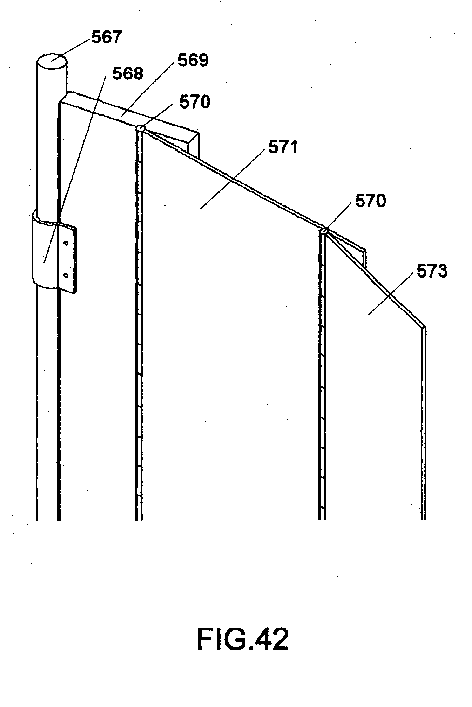

Figure 42 is an enlarged view of the top section of a typical sail subassembly 565.

Inner sail structure 569 is connected to middle sail structure 571 using a sail connecting hinge 570. Middle sail structure 571 is connected to outer sail structure 573 using a sail connecting hinge 570.

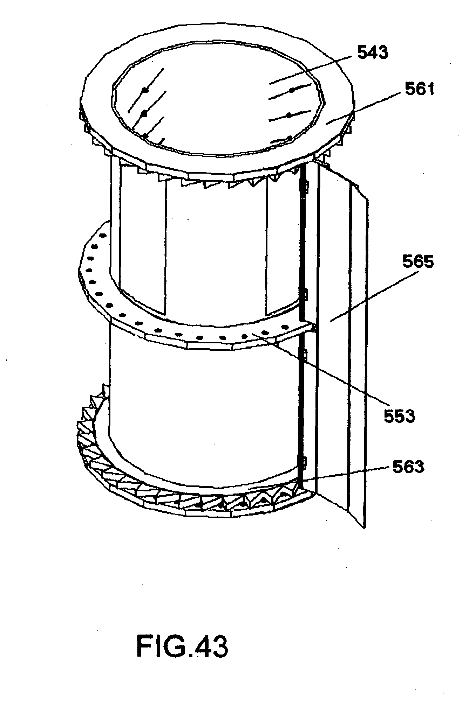

Figure 43 is a perspective view of outer rotor structure 543 with top and bottom sail support subassemblies (561 and 563 respectively) and middle radial sail support structure 553 installed. Also shown installed is a typical sail subassembly 565. Any typical sail subassembly 565 is attached by means of insertion of its pivoting mast structure 567 through top, middle, and bottom radial sail retention structures (Fig.38, Refs. 549, 533, and 557 respectively). Pivoting mast structure 567 is limited in its travel longitudinally by means of both top and bottom longitudinal sail retention structures (Fig.38,Refs. 547 and 559 respectively). Pivoting mast structure 567 is limited in its rotation radially by virtue of contact with the toothed features of top and bottom sail drive structures (Fig.,Refs.551 and 555 respectively).

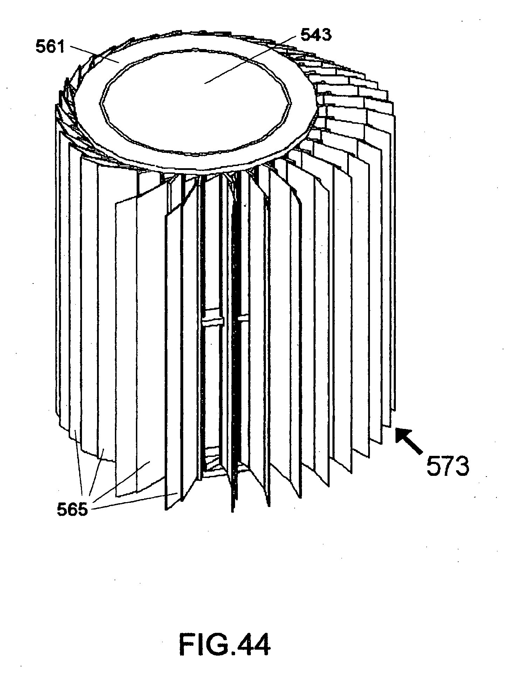

Figure 44 is a perspective view of outer rotor subassembly 573, showing its full complement (36 in this example) of sail subassemblies 565 installed.

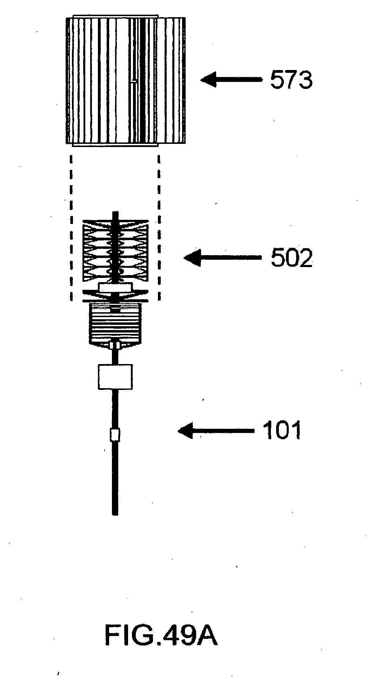

Figure 49A is a front side orthogonal view detailing the mounting of outer rotor subassembly 573 to inner rotor subassembly 502. Outer rotor subassembly 573 is fitted over inner rotor subassembly 502 and attached at inner rotor-to-outer rotor connection points (Fig.17,Ref.504) using screws (not shown).

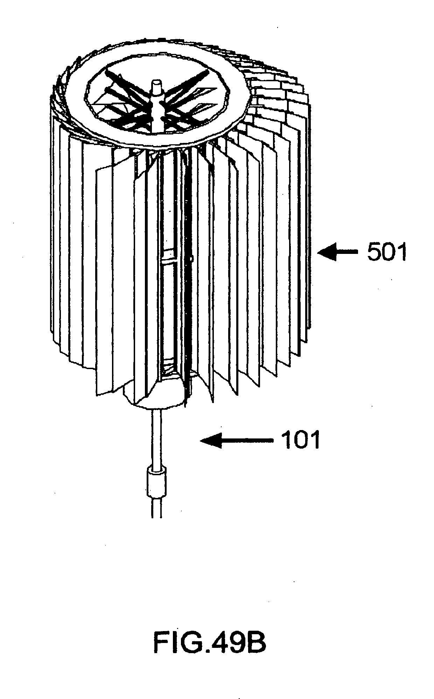

Figure 49B shows a perspective view of rotors assembly 501 and static assembly 101 mounted together.

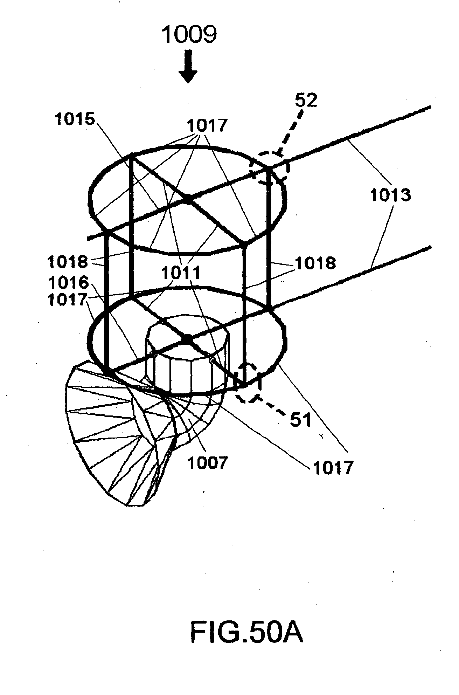

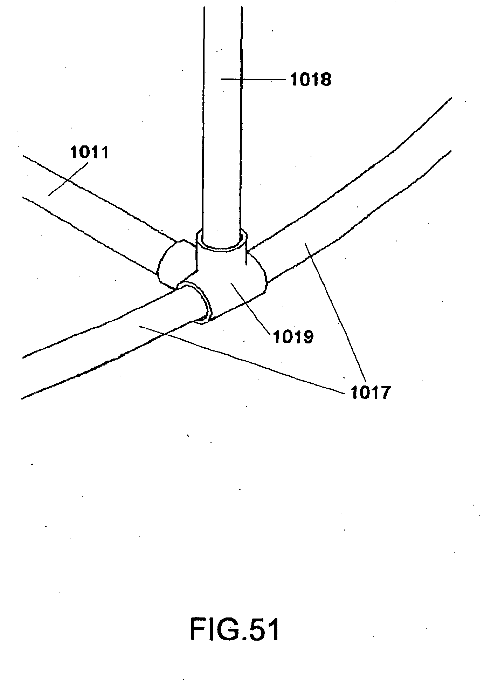

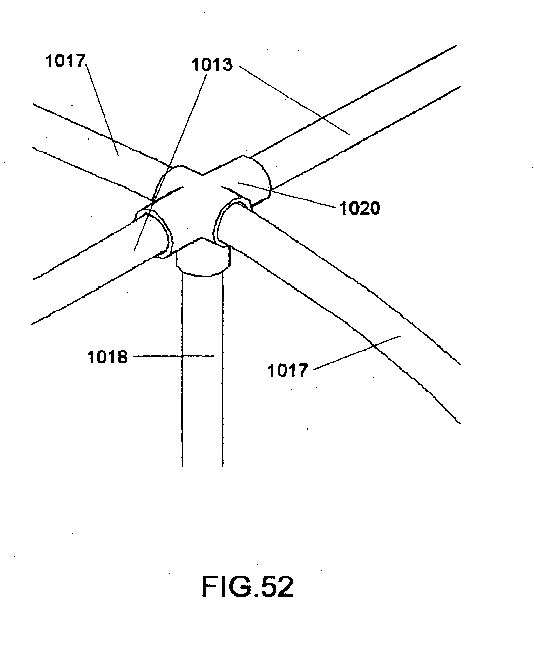

Figure 50A shows a perspective view of a windshield support structure(WSS) 1009. Detailed within this view are WSS lateral spars 1011, WSS aft longitudinal spars 1013, WSS top frontal longitudinal spar 1015, WSS bottom frontal longitudinal spar 1016, WSS outer hub circumferential segments 1017, and WSS vertical support members 1018. Windshield support structure(WSS) 1009 is composed of the abovementioned components connected together to form a cage-like structure. The details of the connections are shown in Fig. 51 and Fig. 52. The various WSS spars and vertical support members are composed of rigid material formed into cylinders. WSS outer hub circumferential segments 1017 are composed of semi-rigid material formed into cylinders pliable enough to form the 90 degree arc segments shown. Figure 50A also shows an intake structure 1007. Intake structure 1007 is a single piece of rigid material formed into a funnel-like shape merging into a ducting tube whose path forms a 90 degree elbow.

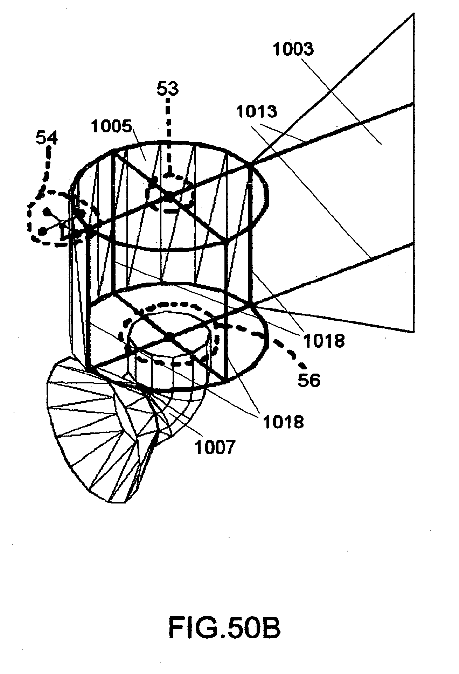

Figure 50B shows a perspective view of directional wind shield assembly 1001. Introduced within this view is a directional control structure 1003, and windshield 1005. Directional control structure 1003 consists of a single piece of rigid material formed into a flat planar surface that is secured to both windshield support structure(WSS) aft longitudinal spars 1013 with screws (not shown). Windshield 1005 is composed of a flexible material deployed along one-half the outer circumference of windshield support structure(WSS) and attached to the associated WSS vertical support members 1018 with screws (not shown). While windshield 1005 should be pliable enough to conform to the shape indicated, it should nevertheless be of sufficient rigidity to preclude undue deformation due to wind pressure being exerted upon it.

Fig. 51 is an enlarged view of a typical type-A junction of windshield support structure(WSS) 1009 components. This view details a connection facilitated by use of a WSS outer hub type-A connection fixture 1019. This connection is typical in all instances where WSS lateral spars 1011, WSS outer hub circumferential segments 1017, and WSS vertical support members 1018 are joined. This type connection is also employed in joining WSS outer hub circumferential segments 1017, WSS vertical support member 1018, and bottom longitudinal frontal spar 1016. All connections are facilitated by insertion of one end of a component into a WSS outer hub type-A connection fixture and secured with screws (not shown). WSS outer hub type-A connection fixture 1019 is composed of a single piece of rigid material.

Figure 52 is an enlarged view of a typical type-B junction of windshield support structure(WSS) 1009 components. This view details a connection facilitated by use of a WSS outer hub type-B connection fixture 1020. This connection is typical in the instances where WSS aft longitudinal spars 1013, WSS outer hub circumferential segments 1017, and WSS vertical support members 1018 are joined. This type connection is also employed in joining the WSS outer hub circumferential segments 1017, WSS vertical support member 1018, and the top longitudinal frontal spar 1015. Connections are facilitated either by insertion of one end of a component into a WSS outer hub type-B connection fixture 1020 (in the case of WSS vertical support members and WSS outer hub circumferential segments 1017), or by insertion through the WSS outer hub type-B connection fixture 1020 (in the case of WSS aft longitudinal spars 1013 and WSS top frontal longitudinal spar 1016). All connections are secured with screws (not shown). The WSS outer hub type-B connection fixture 1020 is composed of a single piece of rigid material.

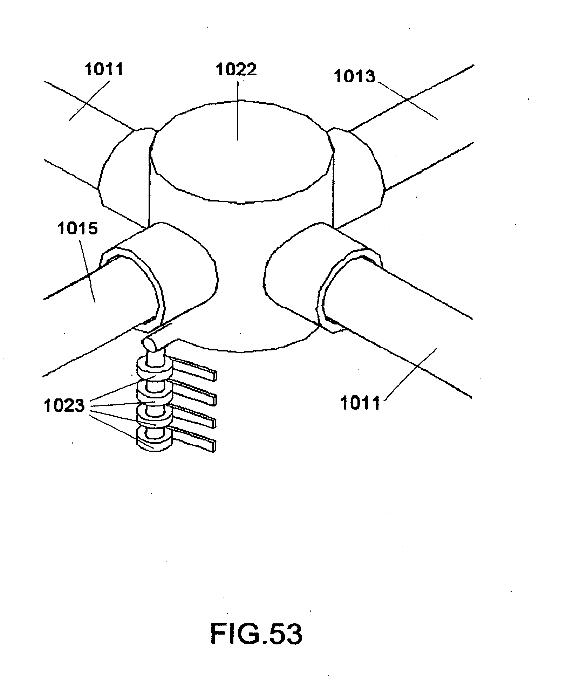

Figure 53 is an enlarged view of windshield support structure(WSS) top inner hub 1022. WSS top inner hub 1022 is composed of a single piece of rigid material formed into a cylinder open on one end and closed on the other with four smaller cylinders open at one end emanating at 90 degree points along its outer circumference as shown. The inner diameter of the larger cylinder structure of WSS top inner hub 1022 is such so as to allow installation over upper bearing for directional windshield assembly (Fig.11,Ref.103). The inner diameter of the smaller cylinder structures is such so as to allow insertion into them of WSS lateral spars 1011, WSS aft longitudinal spar 1013, and WSS top frontal longitudinal spar 1015. All connections are secured with screws (not shown). Radiating from the bottom of the larger cylinder structure of WSS top inner hub 1022, is a horizontal beam supporting anemometer electrical interface pickups subassembly 1023. The anemomter electrical interface pickups subassembly 1023 consists of a plurality (four in this example) of metallic strips connected to a vertical mounting mast in such a fashion to form tightly wound coils with the free ends of the wound strips having in innate spring force inward toward the center of the longitudinal axis of the larger cylinder structure of WSS top inner hub 1022.

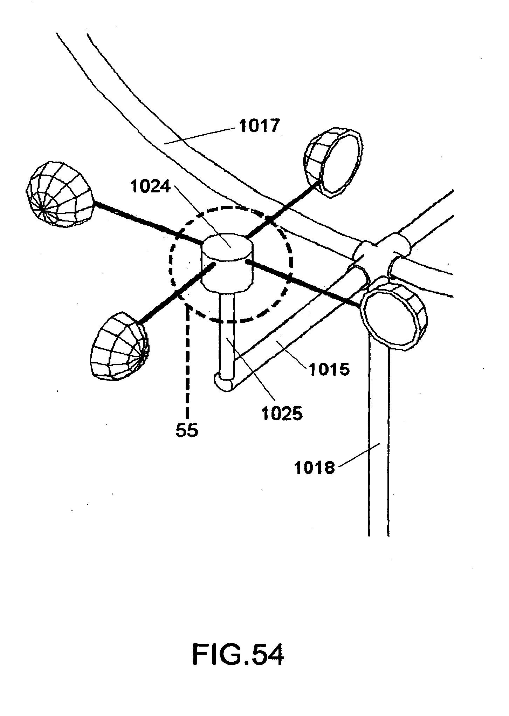

Figure 54 is an enlarged view of an anemometer rotor subassembly 1024. Anemometer rotor subassembly 1024 is comprised of a single piece of rigid material formed into the shape of a central hub with shafts radiating outward containing cuplike structures on the outer ends of the shafts. The cups are all facing in the same direction so as to provide an assymetric profile to the wind in order to propel the cups around the center of the hub in a circular motion. The material of the anemometer rotor subassembly 1024 should be of such density to allow rotation at wind speeds as low as 5 miles per hour. Anemometer rotor subassembly 1024 is mounted on an anemometer support structure 1025 which rises vertically from the end of windshield support structure(WSS) top frontal longitudinal spar 1015. Anemomter support structure 1025 consists of a rigid material shaped into a hollow cylinder open on both ends. Anemometer support structure 1025 is inserted into a hole drilled into the top of WSS top frontal longitudinal spar 1015 and secured with a suitable adhesive.

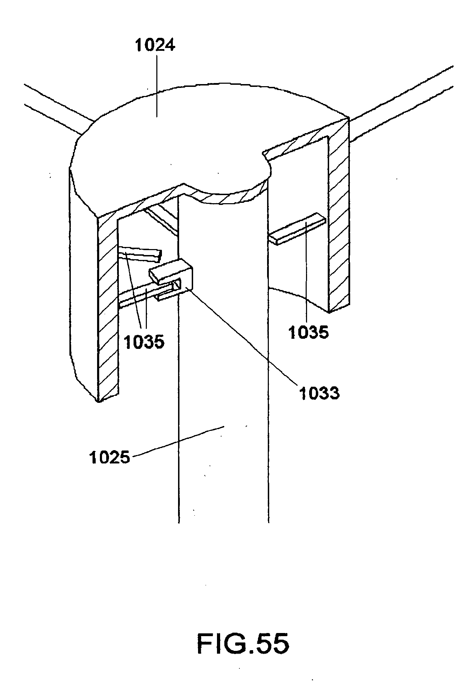

Figure 55 is an enlarged partial sectional view of the wind speed sensing mechanism. The hub of anemometer rotor subassembly 1024 is comprised of a hollow cylinder with rectangular standoffs 1035 emanating at 45 degree points along its inner circumference. These standoffs are of such length so as to pass between two sensor planes of a photoelectric sensor 1033. Photoelectric sensor 1033 is mounted to anemometer support structure 1025 using a suitable adhesive.

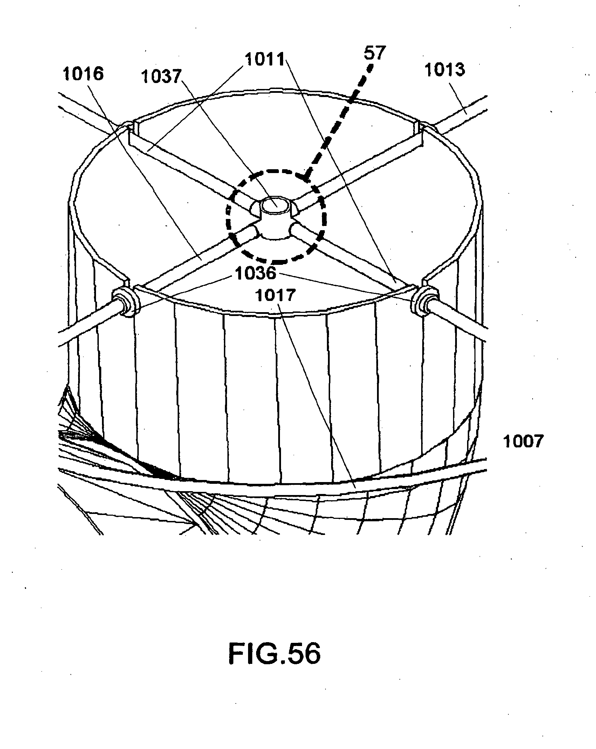

Figure 56 is an enlarged view of the top of intake structure 1007. Intake structure 1007 is mounted to windshield support structure(WSS) lateral spars 1022, WSS bottom frontal longitudinal spar 1016, and WSS aft longitudinal spar 1013 using intake-to-WSS mounting collars 1035 and secured with screws (not shown).

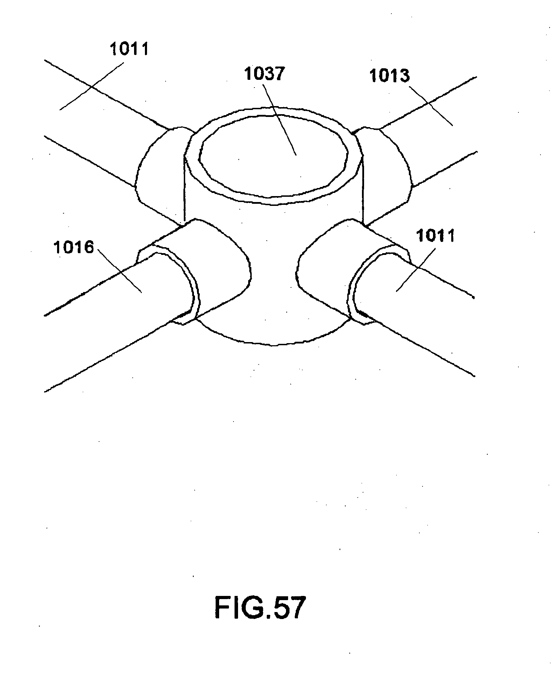

Figure 57 is an enlarged view of windshield support structure(WSS) bottom inner hub 1037. WSS bottom inner hub 1037 is composed of a single piece of rigid material formed into a cylinder open on both ends with four smaller cylinders open at one end radiating at 90 degree points along its outer circumference. The inner diameter of the larger cylinder structure of WSS bottom inner hub 1037 is such so as to allow installation over lower bearing for directional windshield assembly (Fig.11, Ref.115). The inner diameter of the smaller cylinder structures is such so as to allow insertion into them of WSS lateral spars 1011, WSS aft longitudinal spar 1013, and WSS bottom frontal longitudinal spar 1015. All connections are secured with screws (not shown).

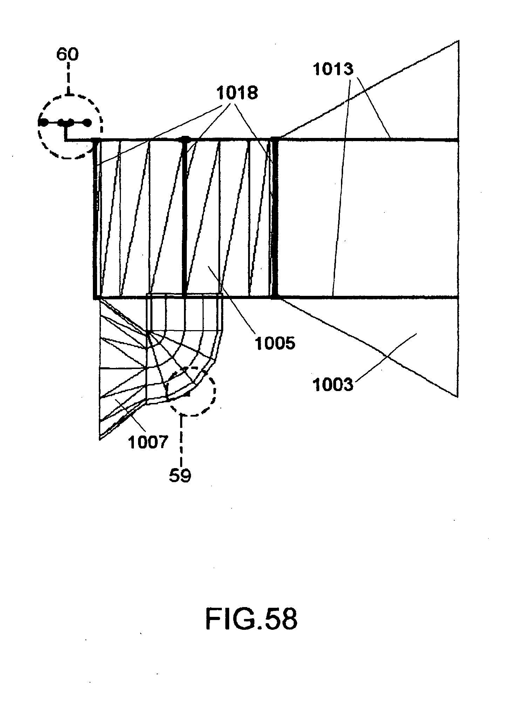

Figure 58 is a right side orthogonal view of directional windshield assembly 1001.

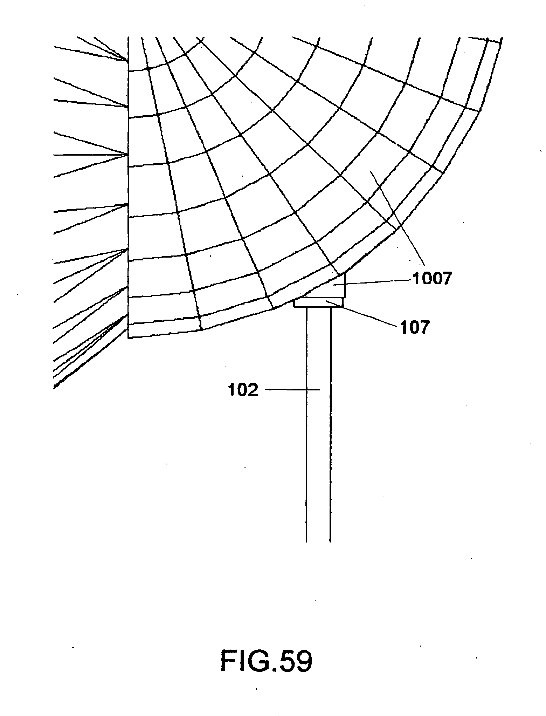

Figure 59 is an enlarged view of the bottom of intake structure 1007. Detailed in this view is the mounting connection of intake structure 1007 to support structure for static assembly 102. This connection is made by mounting intake structure 1007 to bearing for intake structure 107 using screws (not shown).

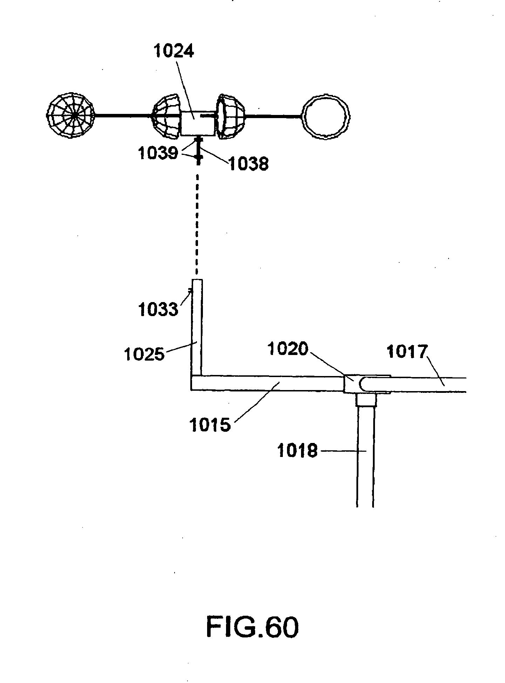

Figure 60 is an enlarged view detailing the installation of anemometer rotor subassembly 1024 to anemometer support structure 1025. Anemometer rotor subassembly 1024 contains an anemometer rotor shaft 1038 with two anemometer rotor shaft bearings 1039 mounted on the shaft. The entire anemometer rotor subassembly 1024 is inserted into the hollow space of anemometer support structure 1025 and held in place by virtue of friction between the outer races of anemometer rotor shaft bearings 1039 against the inner walls of anemometer support structure 1024.

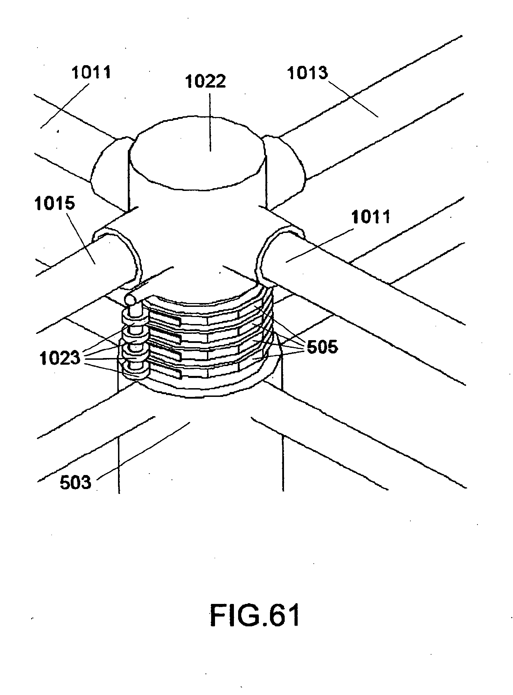

Figure 61 is an enlarged view featuring anemometer electrical interface sliprings 505 and anemometer electrical interface pickups subassembly 1023.

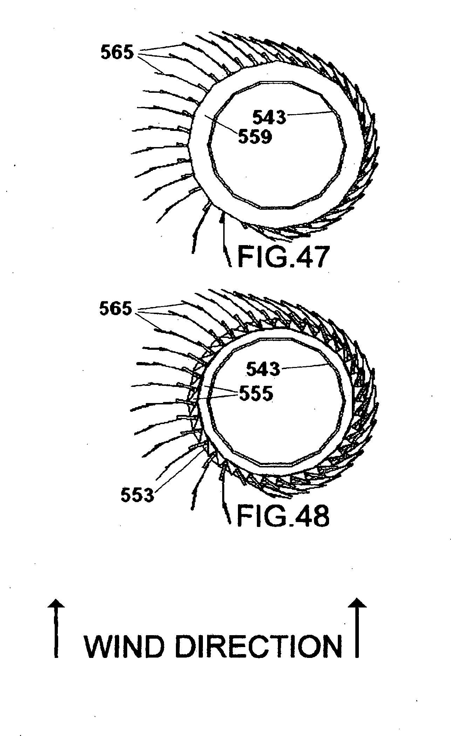

OPERATION - FIGS. 1, 1A, 8, 9, 19, 21, 25, 27B, 28, 29A, 29B, 31B, 34A, 34B, 34C, 35, 44, 45, 46, 47, 48, 50B, 55, 58, 60, 61, 62 -- PREFERRED EMBODIMENT

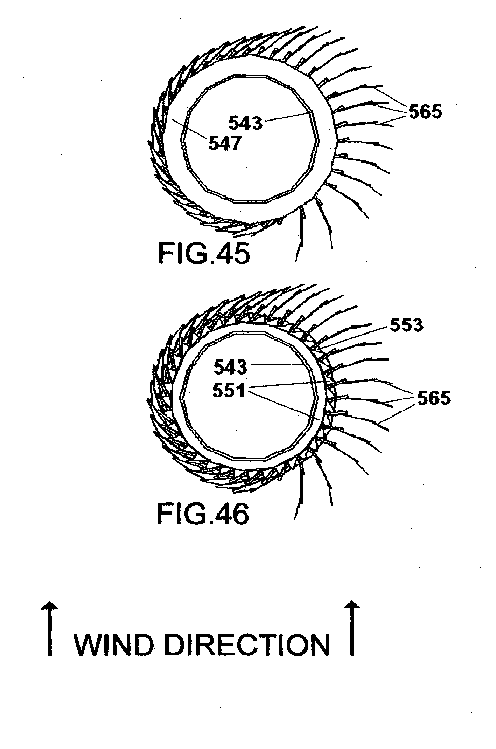

At the onset of wind a directional windshield assembly (Fig.1,Ref.1001) is rotated about the static assembly (Fig.1,Ref.101) so that an intake structure (Fig.58,Ref.1007) is oriented with its funnel opening into the wind. This action is caused by the forces of wind acting upon a directional control structure (Fig.58,Ref.1003) to position the control structure downwind in the same manner as a common weathervane. Simultaneous to the above action the onset of wind also causes sail subassemblies (Fig.44,Ref.565) to exert rotational forces on outer rotor subassembly (Fig.44,Ref.573). Because of the articulated construction of the sail subassemblies (Figs.45-48,Ref.565) they are predisposed to cause the outer rotor subassembly(Fig.44,Ref.573) to rotate in a counterclockwise direction when viewed from above(Fig.45,46).The abovementioned predisposition for counterclockwise rotation is further enhanced by the position of a windshield(Fig.50B,Ref.1005) being oriented such that the wind is blocked from those sail subassemblies(Fig.44,Ref.565) advancing into the wind, thus alleviating the resultant clockwise rotational forces associated with those advancing sails contacting the force of the wind. Further counterclockwise rotational forces are produced as a result of the wind flow through the intake structure (Fig.58,Ref.1007) being directed against the impellor vanes of the mass shifter outer stuctures (Fig.21,Ref.509) of inner rotor subassembly (Fig.21,Ref.502).

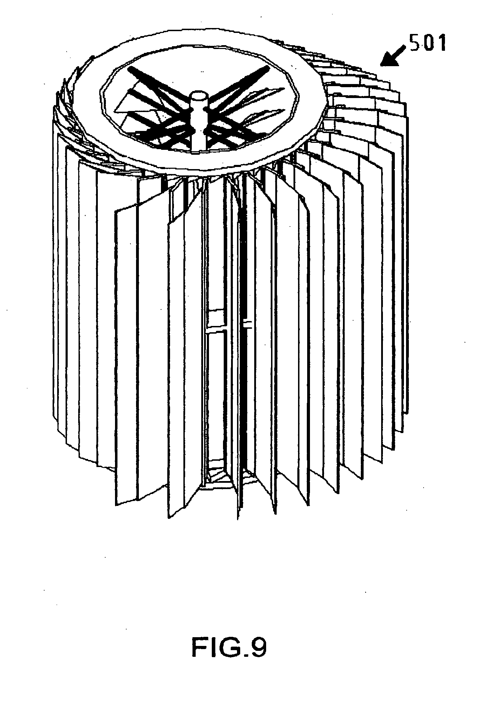

When the rotors assembly(Fig.9) reaches a predetermined rotational velocity, the centrifugal forces acting upon the permanent magnet generator(PMG) actuator flyweights cause them to move from the disengaged position(Fig.29A,Ref.529) to the engaged position(Fig.29B,Ref.529). This results in the movement of the PMG rotor subassembly from the disengaged position(Fig.34B,Ref.513) to the engaged position (Fig.34C,Ref.513). When the PMG rotor subassembly(Fig.34C,Ref.513) is in the engaged position, the air gap between it and the PMG stator subassembly(Fig.34C, Ref.117) is sufficiently small enough to cause the magnets contained within the PMG stator subassembly to induce current flow in the coils contained within the PMG rotor subassembly. The delayed actuation of the permanent magnet generator allows the rotors assembly(Fig.9) to reach a predetermined rotational velocity before the opposing counter force associated with the magnetic field interaction between the PMG rotor subassembly(Fig.34C,Ref.513) and PMG stator subassembly(Fig.34C,Ref.117) is introduced. By having some kinetic energy present in the rotating rotors assembly (Fig.9) before pernanent magnet generator actuation, the overall efficiency of the apparatus is improved by virtue of a faster spool up time of the rotors assembly.

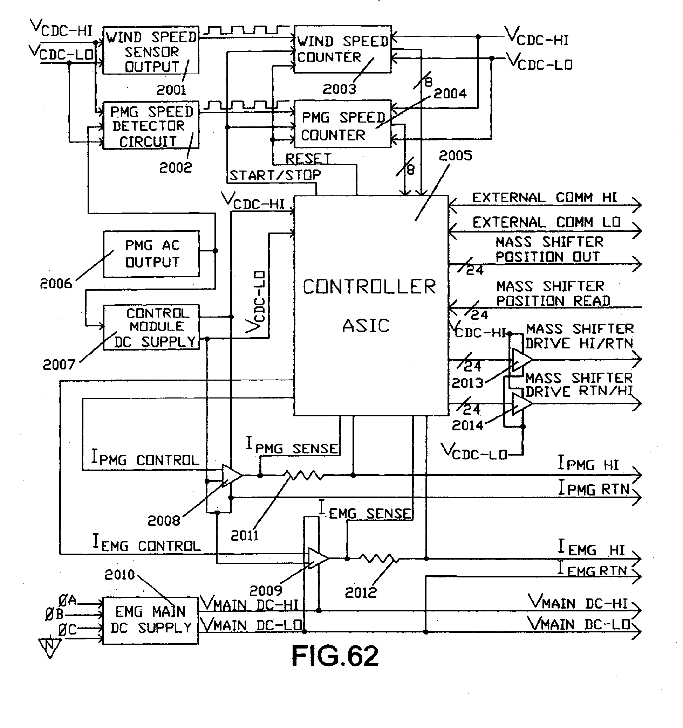

The AC voltage produced by the permanent magnet generator(PMG) is conducted through wires (not shown) within the PMG rotor subassembly(Fig.34C,Ref.513) to conductive PMG rotor radial alignment wheels(Fig.31B,Ref.537). These wheels make contact with conductive surfaces (not shown) found on the inner rotor structure (Fig.29B,Ref.503). The AC voltage is conducted from these surfaces on the inner rotor structure(Fig.29B,Ref.503) with wires (not shown) to the control module(Fig.34B, Ref.511). Figure 62, Ref. 2006 depicts this AC voltage being introduced to the control module and serving as an input to control module DC supply(Fig.62,Ref.2007) and also serving as an input to PMG speed detector circuit (Fig.62,Ref.2002).

The control module DC supply(Fig.62,Ref.2007) receives the AC voltage input then rectifies, filters, and regulates it into a DC voltage. This DC voltaged is used throughout the control module(Fig.34B,Ref,511) and is labled throughout Fig.62 as Vcdc-HI and Vcdc-LO. This DC voltage is used to provide power to all logic devices throughout the control module(Fig.34B,Ref.511), to serve as a stimulus voltage for the wind speed photoelectric sensor(Fig.55,Ref.1033), and to provide power to mass shifter voltage amplifiers(Fig.62,Refs.2013,2014) and Ipmg current amplifier(Fig.62.Ref.2008).

Once the DC voltage reaches a preset level, the controller application specific integrated circuit(ASIC) (Fig.62,Ref.2005) initializes itself and begins to perform power up housekeeping functions such as resetting the wind speed counter(Fig.62, Ref.2003) and PMG speed counter(Fig.62,Ref.2004). Another power up housekeeping function performed by the controller ASIC(Fig.62,Ref.2005) is to read the position signals for all mass shifters(Fig.28,Ref.523) to determine if all shifting masses are at their fully retracted positions(Fig.27B,Ref.525). If any shifting masses are not fully retracted then the controller ASIC(Fig.62,Ref.2005) produces the correct polarity drive signals to the appropriate amplifiers(Fig.62,Ref.2013,2014) to drive the shifting masses toward the fully retracted positions.

The fully retracted position of any shifting mass(Fig.28,Ref.525) is attained by driving mass shifter motor rotor(Fig.28,Ref.521) in the direction to move the shifting mass(Fig.28,Ref.525) toward the shifting mass home position detector(Fig.28, Ref.523). Once the shifting mass(Fig.28,Ref.525) makes contact with the two electrical contacts of the shifting mass home detector(Fig.28,Ref.523) an electrical circuit is closed. A shifting mass detection circuit originates as the signal MASS SHIFTER POSITION OUT from the control module(Fig.21,Ref.511) and is conducted using wires (not shown) to the electrical contacts (not shown) found within a mass shifter connection receptacle(Fig.19,Ref.506). The signal is propogated onto the mass shifter electrical interface pins(Fig.28,Ref.522) by virtue of their insertion into the aforementioned contacts of the mass shifter connection receptacle. The circuit continues via wires (not shown) from mass shifter electrical interface pins(Fig.28,Ref.522) to the shifting mass home position detector(Fig.28,Ref.525) providing the ultimate circuit closure through its conductive material. The circuit returns to control module(Fig.21,Ref.511) by retracing the abovementioned path to be input as the signal MASS SHIFTER POSITION READ (Fig.62). The last function performed by controller ASIC(Fig.62,Ref.2005) upon power up is to read the voltage across Ipmg current sense resistor(Fig.62,Ref.2011) to ensure that there is no current flow out of Ipmg current amplifier(Fig.62,Ref.2008). If there is current flow, the signal Ipmg CONTROL from controller ASIC(Fig.62,Ref.2005) is used as an input to Ipmg current amplifier(Fig.62,Ref.2008) to adjust its output to zero.

After all power up functions have been completed, the controller ASIC(Fig.62,Ref.2005) begins to monitor the wind speed sensor output(Fig.62,Ref.2001). Both DC power and wind speed sensor output signals travel between controller ASIC(Fig.62,Ref.2005) and wind speed photoelectric sensor(Fig.55,Ref.1033) via wires (not shown) from control module(Fig.21,Ref.511) to anemometer electrical interface sliprings(Fig.61,Ref.505). An electrical connection is then made by contact between the sliprings(Fig.61,Ref.505) and pickups (Fig.61,Ref.1023) of the anemometer electrical interface. The final connection path is completed between anemometer electrical interface pickups(Fig.61, Ref.1023) and wind speed photoelectric sensor(Fig.55,Ref.1033) via wires (not shown) routed through the hollow structures of windshield support structure(WSS) top frontal longitudinal spar(Fig.60,Ref.1015) and anemometer support structure(Fig.60,Ref.1025). The output of the wind speed photoelectrical sensor is depicted on Fig. 62 as a square wave pulse train which is routed to the input of the wind speed counter(Fig.62,Ref.2003). The frequency of the sensor output is directly proportional to wind speed, i.e. the faster the wind speed the higher the frequency of the output pulses. The wind speed counter (Fig.62,Ref.2003) is started, stopped, its output sampled, and reset under reat time control of the controller ASIC(Fig.62,Ref.2005)

The output of permanent magnet generator(PMG) (Fig.62,Ref.2006) is also used to provide an input to PMG speed detector circuit(Fig.62,Ref.2002). This circuit contains components that together form a zero crossing detector and pulse shaper and is designed to take the AC waveform input and produce a square wave output at the same frequency as the input. This output is depicted on Fig. 62 as a square wave pulse train that is routed to the input of PMG speed counter(Fig.62,Ref.2004). The frequency of the output signal from PMG speed detector circuit is directly proportional to the rotational velocity of rotors assembly(Fig.9,Ref.501), i.e. the faster the rotors assembly rotates, the higher the frequency of the output pulses. PMG speed counter is started, stopped, its output sampled, and reset under real time control of controller ASIC(Fig.62,Ref.2005).

Once samples of the wind speed have been obtained from the wind speed counter (Fig.62,Ref.2003) the controller ASIC(Fig,62,Ref.2005) performs an access to an internal memory using an averaged value of the wind speed as an address to obtain the optimum mass shifter positional profile data for that particular wind speed. The optimum profile is compared with the actual position configuration of the shifting masses (Fig.25,Ref.525) and a delta value is computed. If the delta value indicates that the actual position of the shifting masses(Fig.25,Ref.525) should be more toward the center of the rotors assembly(Fig.9,Ref.501), then the controller ASIC(Fig.62,Ref.2005) produces a drive signal to the appropriate shifting masses in the polarity necessary to drive the mass shifter motor rotor(Fig.25,Ref.521) in the proper rotational direction to cause the mass shifter drive shaft(Fig.25,Ref.527) to move the shifting mass(Fig.25, Ref.525) more toward the desired direction. If the delta value indicates that the actual position of the shifting masses(Fig.25,Ref.525) should be more away from the center of the rotors assembly(Fig.9,Ref.501), then the correct polarity drive signal is produced in order for the abovementioned actions to move the shifting masses (Fig.25,Ref.525) farther from the center.The actual positions of the shifting masses(Fig.25,Ref.525) are kept within the controller ASIC(Fig.62,Ref.2005) using internal shift registers, one for each shifting mass, that are initialized upon power up and clocked up or down with subsequent drive pulses to each mass shifter motor housing(stator)(Fig.25,Ref.519). This results in an instantaneous approximation of each shifting mass position using the product obtained by multiplying the value of the shift register with the constant distance represented by the typical shifting mass displacement acheived by the application of one drive pulse. The drive signals are depicted as outputs from the controller ASIC (Fig.62,Refs.2013,2014) where they are output as the signals MASS SHIFTER DRIVE HI/RTN and MASS SHIFTER DRIVE RTN/HI respectively.

The physical connections for mass shifter drive signals are routed via wires (not shown) from control module(Fig.21,Ref.511) to the electrical contacts (not shown) found within mass shifter connection receptacles(Fig.19,Ref.506). The mass shifter drive signals are then further propogated onto the mass shifter electrical interface pins (Fig.28, Ref.522) by virtue of their insertion into the aforementioned contacts of the mass shifter connection receptacles(Fig.18,Ref.506). The two mass shifter electrical interface pins associated with a typical pair of mass shifter drive signals are physically adjoined to the mass shifter motor housing(stator)(Fig.25,Ref.519) and electrically connected to the stator winding found therein. As a result of the connections described above, any drive pulse from the controller ASIC(Fig.62,Ref.2005) will be amplified and applied across the associated mass shifter motor housing(stator)(Fig.25,Ref.519) winding resulting in a magnetic rotational force being exerted upon the mass shifter motor rotor(Fig.25, Ref.521) causing it to rotate and in turn causing the mass shifter drive shaft(Fig.25, Ref.527) to rotate.

Once samples of the permanent magnet generator(PMG) rotor(Fig.34,Ref.513) speed have been obtained from the PMG speed counter(Fig.62,Ref.2004) the controller ASIC (Fig.62,Ref.2005) performs a calculation of the kinetic energy of the rotating rotors assembly(Fig.9,Ref.501) by multiplying the square of its rotational velocity by its moment of inertia. The moment of inertia of the rotors assembly(Fig.9,Ref.501) will be known because the mass of the rotors assembly is a known constant and the geometrical configuration of this mass is known because the positions of all shifting masses(Fig.25,Ref.525) are also know by means described above. Once a calculation of kinetic energy is obtained, the controller ASIC(Fig.62,Ref.2005) uses this value as an address into internal memory to obtain data reflecting the optimum current value to be output from Ipmg and lemg current amplifiers (Fig.62,Refs.2008 and 2009 respectively). This data is used to generate inputs to the abovementioned current amplifiers whose outputs are used to drive coils associated with the electromagnets found on the electromagnetic generator(EMG) rotor subassemblies(Fig.34A,Ref.515). The outputs from both current amplifiers are measured by applying the voltages developed across the Ipmg and lemg sense resistors (Fig.62,Refs.2011 and 2012 respectively) to analog-to-digital converters internal to controller ASIC(Fig.62,Ref.2005) and comparing the resultant digital outputs of the converters to the optimum values stored in memeory internal to controller ASIC. The inputs to current amplifiers Ipmg and lemg (Fig.62, Refs. 2008 and 2009 respectively) are adjusted accordingly until the measured current output values are equal to the optimum values.

The output of Ipmg current amplifier(Fig.62,Ref.2008) is derived from the power supplied from control module DC supply(Fig.62,Ref.2007). The output of lemg current amplifier (Fig.62,Ref.2009) is derived from the power supplied from the electromagnetic generator (EMG) main DC supply(Fig.62,Ref.2010). The output of Ipmg current amplifier(Fig.62, Ref.2008) must be used first to generate magnetic fields surrounding its respective coils found on the electromagnetic generator(EMG) rotor subassemblies(Fig.34A,Ref.515). This action leads to a production of AC voltages from the respective stator windings found on the electromagnetic generator(EMG) stator subassemblies(Fig.34A,Ref.119). These AC voltages are depicted as intputs to EMG main DC supply(Fig.62,Ref.2010) which are rectified, filtered regulated, and output as DC voltage labled Vmain DC-HI and Vmain DC-LO. This Vmain DC output is used by lemg current amplifier to generate magnetic fields surrounding its respective coils found on the electromagnetic generator(EMG) rotor subassemblies(Fig.34A,Ref.119). This in turn causes AC voltages to be generated from its respective stator windings on electromagnetic generator(EMG) stator subassemblies(Fig.34A,Ref.119) that are in common with those already generated by the action associated with the Ipmg current amplifier(Fig.62,Ref.2008) and are additive in nature to those abovementioned AC voltages and are applied as inputs to EMG main DC supply(Fig.62,Ref.2010). The current generated by voltages produced by the permanent magnet generator(PMG) is used to indirectly flash the coils of the electromagnets associated with the electromagnetic generator(EMG) rotor subassemblies(Fig.34A,Ref.515). Once the electromagnetic generaor starts producing AC voltage, a portion of the output of EMG main DC supply(Fig.62,Ref.2010) can in turn be used to power lemg current amplifier (Fig.62,Ref.2009), in order to provide self-sustaining current to the associated electromagnets found on the electromagnetic generator rotor subassemblies(Fig.34A, Ref.515). That portion of power from EMG main DC supply(Fig.62,Ref.2010) not used to supply the lemg current amplifier(Fig.62,Ref.2009) is the power that is available to supply external loads. For example, an inverter to be used to produce power at the prevailing AC voltage and frequency, capable of being synchronized to the local grid or used to provide standalone service.

That portion of power from EMG main DC supply(Fig.62,Ref.2010) used to supply lemg current amplifier(Fig.62.,Ref.2009) is transmitted via wires (not shown) from EMG main DC supply(Fig.8,Ref106) to a pair of power transfer/external communication pickups(Fig.35,Ref.113). The two conductors are propogated via contact between power transfer/external communication pickups(Fig.35,Ref.113) and the associated power transfer/external communication sliprings(Fig.35.Ref.507). The power is then conducted from the pair of power transfer/external communication sliprings(Fig.35, Ref.507) via wires (not shown) to control module(Fig.34B,Ref.511). The outputs of Ipmg and lemg current amplifiers(Fig.62,Refs. 2008 and 2009 respectively) are routed via wires (not shown) from control module(Fig.34B,Ref.511) to electromagnetic generator (EMG) rotor subassemblies(Fig.34A,Ref.515).

A pair of pickups found on the power transfer/external communication pickups(Fig.35, Ref.113) and a pair of sliprings found on power transfer/external communication sliprings(Fig.35,Ref.507) are used to provide a path for connection to two wires from control module(Fig.34B,Ref.511) to an external jack (not shown) mounted on static assembly(Fig.8,Ref.101). These wires are depicted on Fig.62 as EXTERNAL COMM HI and EXTERNAL COMM LO and are used to facilitate a connection point for external test and monitoring devices.

Although the description above contains many specifications, these should not be construed as limiting the scope of the invention but as merely providing illustration of an embodiment of this invention.

Thus the scope of the invention should be determined by the appended claims rather than by the examples given.

### DRAWINGS -- INDEX TO REFERENCE NUMERALS

- 101: static assembly
- 102: support structure for static assembly
- 103: upper bearing for directional windshield assembly
- 105: upper bearing for rotors assembly
- 106: electromagnetic generator(EMG) main DC supply
- 107: bearing for intake structure
- 109: generator stator support structure
- 111: lower bearing for rotors assembly
- 113: power transfer/external communication pickups subassembly
- 115: lower bearing for directional windshield assembly
- 117: permanent magnet generator(PMG) stator subassembly
- 119: electromagnetic generator(EMG) stator subassembly
- 501: rotors assembly
- 502: inner rotor subassembly
- 503: inner rotor hub structure
- 504: inner rotor-to-outer rotor connection point
- 505: anemometer electrical interface sliprings
- 506: mass shifter connection receptacle
- 507: power transfer/external communication sliprings
- 508: permanent magnet generator(PMG) actuator flyweight housing connection receptacle
- 509: mass shifter subassembly
- 511: control module
- 512: control module collar
- 513: permanent magnet generator(PMG) rotor subassembly
- 515: electromagnetic generator(EMG) rotor subassembly
- 516: electromagnetic generator(EMG) rotor mounting hub
- 517: mass shifter outer structure
- 518: mass shifter outer structure guide channel
- 519: mass shifter motor housing(stator)
- 520: mass shifter motor housing guide key
- 521: mass shifter motor rotor
- 522: mass shifter electrical interface pins
- 523: shifting mass home position detector
- 525: shifting mass
- 526: shifting mass guide key
- 527: mass shifter drive shaft
- 528: permanent magnet generator(PMG) actuator flyweight housing
- 529: permanent magnet generator(PMG) actuator flyweight
- 530: permanent magnet generator(PMG) actuator flyweight stop
- 531: permanent magnet generator(PMG) actuator flyweight pulley
- 533: permanent magnet generator(PMG) actuator drive cable
- 535: permanent magnet generator(PMG) actuator drive cable-to-rotor attachment ring
- 537: permanent magnet generator(PMG) actuator radial alignment wheel
- 539: permanent magnet generator(PMG) actuator disengagement spring
- 540: permanent magnet generator(PMG) actuator rotor-to-disengagement spring attachment ring
- 541: permanent magnet generator(PMG) actuator disengagement spring-to-inner rotor hub attachment ring
- 543: outer rotor structure
- 545: mass shifter subassembly retention plates
- 547: top longitudinal sail retention structure
- 549: top radial sail retention structure
- 551: top sail drive structure
- 553: middle radial sail retention structure
- 555: bottom sail drive structure
- 557: bottom radial sail retention structure
- 559: bottom longitudinal sail retention structure
- 561: top sail support subassembly
- 563: bottom sail support subassembly
- 565: sail subassembly
- 567: pivoting mast structure
- 568: mast-to-sail connecting bracket
- 569: inner sail structure
- 571: middle sail structure
- 573: outer sail structure
- 1001: directional windshield assembly
- 1003: directional control structure
- 1005: windshield
- 1006: anemometer subassembly
- 1007: intake structure
- 1009: windshield support structure(WSS)
- 1011: windshield support structure(WSS) lateral spar
- 1013: windshield support structure(WSS) aft longitudinal spar
- 1015: windshield support structure(WSS) top frontal longitudinal spar
- 1016: windshield support structure(WSS) bottom frontal longitudinal spar
- 1017: windshield support structure(WSS) outer hub circumferential segment
- 1018: windshield support structure(WSS) vertical support member
- 1019: windshield support structure(WSS) outer hub type-A connection fixture
- 1020: windshield support structure(WSS) outer hub type-B connection fixture
- 1022: windshield support structure(WSS) top inner hub
- 1023: anemometer electrical interface pickups subassembly
- 1024: anemometer rotor subassembly
- 1025: anemometer support structure
- 1033: photoelectric sensor
- 1035: photoelectric sensor activation tab
- 1036: intake structure-to-windshield support structure(WSS) mounting collar
- 1037: windshield support structure(WSS) bottom inner hub
- 1038: anemometer rotor shaft
- 1039: anemometer rotor shaft bearing
- 2001: wind speed sensor output
- 2002: PMG speed detector circuit
- 2003: wind speed counter
- 2004: PMG speed counter
- 2005: controller ASIC
- 2006: PMG AC output
- 2007: control module DC supply
- 2008: Ipmg current amplifier
- 2009: lemg current amplifier
- 2010: EMG main DC supply
- 2011: Ipmg current sense resistor
- 2012: lemg current sense resistor
- 2013: mass shifter drive amplifier HI/RTN
- 2014: mass shifter drive amplifier RTN/HI

## Claims

1. A device that transforms the kinetic energy inherent in wind into kinetic energy in the form of mechanical rotation of a mass such that the maximum angular velocity attainable of said rotating mass for a given wind speed is obtained in the minimum time possible through the use of mechanical means comprising:
(a) a rigid shaft anchored to the earth or some fixed structure so that its orientation is such that its longitudinal axis is approximately vertical and having a plurality of cylindrical bearings attached so that the inner races of said bearings are affixed to the shaft with the outer races of said bearings allowed to rotate freely concentrically about the longitudinal axis of the shaft;
(b) a hollow cylindrical structure serving as an outer rotor (543) and another hollow cylindrical structure smaller in diameter serving as an inner rotor with the two connected to each other by a plurality of radial support structures serving as spokes between them with the inner rotor being attached to said rigid shaft via connection to a plurality of said outer races of said bearings;
(c) a plurality of rigid planar surfaces attached to the outside circumference of the outer rotor (543) to form a plurality of sails which when impacted by incident wind will exert a torque upon the outer rotor (543) tangentially to cause the collective rotating mass of sails, cylinders, spokes, and outer bearing races to rotate about the longitudinal axis of said rigid shaft;
(d) a windshield support structure (1009) comprised of a pair of identical circular structures with each having an outer circumferential structure connected to an inner hub (503) by a plurality of radial support structures serving as spokes between then with both said circular structures arranged so that the planar area bounded by each circle is oriented horizontally with the two structures some distance apart from each other vertically and being joined together with a plurality of vertical support members (1018) with the entire assemblage forming a cagelike structure that is attached to said rigid shaft via connection of said inner hubs (503) to a plurality of said outer races of said bearings at points along the rigid shaft to allow the entire assemblage to rotate freely about the longitudinal axis of said rigid shaft independently of said rotating mass;
(e) a windshield in the form of a curved planar structure attached to said windshield support structure (1009) via a plurality of said vertical support members (1018) so that the circular extent of said windshield encompasses 180 degrees of arc and is bounded vertically by the same linear dimension as that of said vertical support members' (1018) longitudinal axes.
(f) a directional control structure in the form of a rigid surface oriented vertically and attached to one vertical edge of said windshield and extending radially outside of and perpendicular to the circumference of said windshield support structure (1009) to such extent necessary so as to provide such force as necessary to keep said windshield in a constant attitude with respect to wind direction so as to allow wind pressure to be applied to only one half the frontal area of said rotating mass that is facing into the wind whereby creating asymmetric forces to be applied to said attached sails causing said rotating mass to turn in one direction only;
(g) a hollow cylindrical structure forming a duct with the same inner diameter as that of said outer rotor (543) and a length of approximately four times the diameter of said duct with said duct bent in the middle of said length to form a 90 degree elbow with one half of said duct oriented with its longitudinal axis horizontal and the other half of said duct oriented with its longitudinal axis vertical with the top of the vertical portion of said duct connected to the bottom of said windshield support structure (1009) via attachments to said windshield support structure (1009) radial support structures with the horizontal portion of said duct having a flared funnel attached to its open end with the horizontal portion of said duct connected to said rigid shaft via connection to said outer race such that the entire duct rotates about the longitudinal axis of said rigid shaft in unison with said windshield support structure (1009) whereby the open end of the funnel is always pointed into the wind;
(h) a plurality of rigid planar structures attached to the outer rotor-to-inner rotor radial support structures so as to form a plurality of impellor vanes oriented in such a manner so as to provide an additive component of torque to said rotating mass by virtue of the wind being redirected through said funnel and duct and impinging upon said impellor vanes before being exhausted through the open top of said rotating mass.

2. The device of Claim 1 wherein said sails of said plurality are formed from the connection of individual rigid planar structures to each other so as to form articulated structures whereby maximum collective surface area is afforded to capture wind energy in one direction of rotation of said rotating mass but in the opposite direction of rotation of said rotating mass the profile of said articulated sails afford relatively minimal collective surface area whereby ensuring through asymmetric forces that the rotating mass will always initiate and sustain rotation in one direction only.

3. The device of Claim 1 wherein said sails of said plurality are mounted to the structure of said outer rotor (543) in such a manner so as to allow the connecting masts of said sails to pivot radially about their longitudinal axes through an angle determined by physical limits imposed through structural contact with said outer rotor structure (543) whereby allowing said sails to produce a greater torque in one direction of pivot travel and to produce a lesser torque in the opposite direction of pivot travel whereby ensuring through asymmetric forces that the rotating mass will rotate in one direction only.

## Patentansprüche

1. Ein Gerät, die die kinetische Energie inhärent Wind in kinetische Energie in Form von mechanischer Rotations einer Masse verwandelt, so dass der maximale Winkelgeschwindigkeit erreichbar der rotierenden Masse bei einer gegebenen Windgeschwindigkeit wird in der minimalen möglichen Zeit durch die Verwendung die Verwendung von mechanischen Mitteln, umfassend:
(a) eine starre Achse zur Erde verankert oder ein festen Aufbau, so daß ihre Orientierung ist derart, daß ihre Längsachse ungefähr senkrecht und mit einer Mehrzahl von Zylinderlagern angebracht, so dass die Innenringe der Lager an der Welle mit dem befestigten Außenringe 10 der Lager ungehindert konzentrisch um die Längsachse der Welle zu drehen;
(b) hohle zylindrische Struktur, wie einem Außenrotor (543) und ein weiteres hohlzylinderförmige Struktur einen kleineren Durchmesser als Innenläufer mit zwei miteinander durch eine Mehrzahl von radialen Tragstrukturen wie Speichen zwischen ihnen mit der inneren dient, verbunden dient, wobei Rotor über eine Verbindung zu einer Vielzahl von mit dem starren gesellschaft an dem äußeren Laufringe der Lager;
(c) eine Vielzahl von starren , um den Außenumfang des Außenrotors (543) befestigt ebenen Oberflächen eine Mehrzahl von Segeln , die , wenn sie durch einfallende Wind beeinflusst zu bilden wird ein Drehmoment auf den äußeren Rotor (543) tangential auszuüben, um die kollektive Drehen verursachen Masse Segel, Zylinder, Speichen und äußeren Lagerlaufbahnen um die Längsachse drehbar an die starre Achse;
(d) ein Scheibenstützstruktur (1009) bestehend aus einem Paar von identischen kreisförmigen Strukturen mit denen jeder eine äußere Umfangsstrukturan einer inneren Nabe (503) verbunden ist durch eine Mehrzahl von radialen Tragstrukturen wie Speichen zwischen dann mit beiden dient die kreisförmige Strukturen so angeordnet, dass die ebene Fläche von jedem Kreis begrenzt wird horizontal auf die beiden Strukturen in einem gewissen Abstand voneinander vertikal orientierten und zusammen mit einer Vielzahl von vertikalen Stützelemente (1018) mit dem gesamten Zusammenbau Bildung eines käfigartigen Struktur, die an der starren Welle über eine Verbindung des inneren Naben (503) mit einer Vielzahl von befestigten trat die äußeren Laufringe der Lager an den Punkten entlang der starren Welle, damit der gesamte Zusammenbau frei um die Längsachse der Welle zu drehen starren unabhängig der rotierenden Masse;
(e) eine Windschutzscheibe in Form einer gekrümmten ebenen Struktur , die an dem Windschutzscheibentragstruktur (1009) über eine Mehrzahl der genannten vertikalen Stützelemente (1018), so dass der kreisförmige Umfang der Windschutzscheibe umfasst 180 Bogengrade und ist vertikal begrenzt durch die gleiche Längenabmessung wie der der vertikalen Stützelemente (1018) Längsachsen ;
(f) eine Richtungssteuerstruktur in der Form einer starren Oberfläche vertikal Ausgerichtet und um eine vertikale Kante der Windschutzscheibe befestigt ist und sich radial außerhalb und senkrecht zu dem Umfang der Windschutzscheibentragstruktur (1009) in einem solchen Ausmaß erforderlich ist, um liefern eine solche Kraft als notwendig zu halten, wobei die Windschutzscheibe in einem konstanten Verhältnis bezüglich der Windrichtung, um zu ermöglichen Winddruck auf nur eine Hälfte der Stirnfläche des sich drehenden Masse , in dem in den Wind , wobei die Schaffung asymmetrischen Kräfte aufgebracht werden zu dem Segel angebracht Veranlassen der rotierenden Masse , um in nur einer Richtung drehen angelegt wird;
(g) eine hohle zylindrische Struktur, die einen Kanal mit dem gleichen Innendurchmesser wie der Außenrotor (543) und eine Länge von etwa dem Vierfachen des Durchmessers des Kanals mit dem Kanal gebogen in der Mitte der Länge, um eine 90 zu bilden Grad Winkel mit einem Falf des Kanals mit ihrer Längsachse horizontal und die andere Hälfte des Kanals mit ihrer Längsachse vertikal mit dem oberen Ende des vertikalen Abschnitts des Kanals an der Unterseite verbunden orientiert die Scheibenstützstruktur (1009) über Anhängen an die Windschutzscheibenhalterungsstruktur (1009) radialen Stützstrukturen mit dem orizontal Abschnitt der Kanal mit einem konisch erweiterten Trichter mit dem horizontalen Abschnitt des Kanals verbunden ist, um dessen offenes Ende an dem starren Welle über eine Verbindung zu dem Außenring, so dass die gesamte Kanal dreht sich um die Längsachse der starren Welle im Gleichklang mit der Windschutzscheibe Stützstruktur (1009), wobei das offene Ende des Trichters immer in den Wind zugespitzt;
(h) eine Vielzahl von starren zu den äußeren Rotor zu inneren Rotors radialen Stützstrukturen befestigt ist, um eine Mehrzahl von Laufrad Leitschaufeln derart orientiert zu bilden, um eine Additivkomponente Drehmoment bereitzustellen planaren Strukturen auf die rotierende Masse durch aufgrund des Windes wird durch den Trichter und den Kanal Auftreffen auf das Laufrad Leitschaufeln bevor sie durch die offene Oberseite der rotierenden Masse erschöpft umgelenkt.

2. Vorrichtung nach Anspruch 1, wobei das Segel aus der Mehrzahl aus der Verbindung von einzelnen starren planaren Strukturen miteinander, um Gelenkstrukturen zu bilden , wobei die Höchst kollektive Oberfläche gewährt wird, die Windenergie in eine Drehrichtung der besagten erfassen gebildet Drehmasse jedoch in entgegengesetzter Richtung der Drehung des drehenden Masse das Profil die Gelenk Segel leisten relativ minimale kollektive Oberfläche , wodurch sichergestellt durch asymmetrische Kräfte, die die rotierende Masse immer starten und aufrecht zu Drehung in nur eine Richtung.

3. Vorrichtung nach Anspruch 1, wobei das Segel aus der Vielzahl an der Struktur montiert ist dem Außenrotor (543) in einer solchen Weise , so daß die Verbindungs Masten der Segel radial um ihre Längsachse durch einen bestimmten Winkel drehbar, so dass durch physikalische Grenzen durch Strukturkontaktgelten, mit dem äußeren Rotorstruktur (543), durch Ermöglichen, daß die Segel um ein größeres Drehmoment in einer Richtung der Schwenkweg zu erzeugen und zu einem geringeren Drehmoment in der entgegengesetzten Richtung der Schwenkweg erzeugen , wodurch sichergestellt durch asymmetrische Kräfte , dass die Drehmasse wird nur in einer Richtung drehen.

## Revendications

1. Un dispositif qui transforme l'énergie cinétique éolienne en énergie cinétique sous forme de rotation mécanique d'une masse telle que la vitesse angulaire maximale atteignable de ladite masse en rotation pour une vitesse de vent donnée est obtenue dans le minimum de temps possible grâce à l'utilisation de mécanique comprenant :
(a) un axe rigide ancré au sol ou d'une structure fixe de sorte que son orientation est telle que son axe longitudinal est sensiblement vertical et ayant une pluralité de paliers cylindriques attachés de manière que les bagues intérieures desdits paliers sont fixées à l'arbre avec les bagues extérieures desdits paliers et peut tourner librement de manière concentrique autour de l'axe longitudinal de l'arbre ;
(b) une structure cylindrique creuse servant de rotor extérieur (543) et une autre structure cylindrique creuse de plus petit diamètre servant de rotor interne; les deux reliées entre eux par une pluralité de structures de support radiaux servant de rayons entre eux avec le rotor intérieur étant fixée à ladite tige -rigide via une connexion à une pluralité desdites bagues extérieures desdits paliers;
(c) une pluralité de surfaces planes rigides fixées à la circonférence extérieure du rotor extérieur (543) pour former une pluralité de voiles qui, lorsqu'il est affecté par le vent incident va exercera un couple sur le rotor extérieur (543) tangentiellement à provoquer la rotation collective de la masse des voiles, des cylindres, des rayons, et les courses de roulement extérieures à tourner autour de l'axe longitudinal dudit axe rigide;
(d) une structure de support de pare-brise (1009) constituée d' une paire de structures circulaires identiques ayant chacune une structure circonférentielle extérieure reliée à un moyeu interne (503) par une pluralité de structures de support radiaux servant de rayons entre à la fois avec lesdites structures circulaires agencé de sorte que la surface plane délimitée par chaque cercle est orienté horizontalement avec les deux structures à une certaine distance les uns des autres verticalement et étant reliées entre elles par une pluralité d'éléments verticaux de support (1018) avec l'ensemble de l'assemblage formant une structure cage qui est fixé audit arbre rigide par une connexion desdits moyeux intérieurs (503) à une pluralité desdites bagues extérieures desdits paliers à des points le long de la tige rigide pour permettre à l'ensemble de l'assemblage de tourner librement autour de l'axe longitudinal de ladite tige rigide independemment de ladite masse tournante ;
(e) un pare-brise sous la forme d' une structure plane incurvée fixée à ladite structure de support de pare-brise (1009) par l'intermédiaire d' une pluralité desdits éléments de support vertical (1018) de sorte que l'étendue circulaire dudit pare-brise s'etend a 180 degrés d'arc et est délimitée verticalement par la même dimension linéaire comme celle desdits éléments de support vertical (1018) de l' axe longitudinal ;
(f) une structure de commande directionnelle sous la forme d' une surface rigide orientée verticalement et fixée à un bord vertical dudit pare-brise et se prolongeant radialement à l'extérieur de et perpendiculaire à la circonférence de ladite structure de support de pare-brise (1009) dans la mesure nécessaire pour fournir la force nécessaire pour maintenir ledit pare-brise dans une attitude constante par rapport à la direction du vent de façon à ce que la pression du vent soit appliquée à une seule moitié de la surface frontale de ladite masse qui est face au vent, laquelle créera des forces asymétriques appliquées audit joint des voiles et amener ladite masse tournante a tourner dans une direction seulement ;
(g) une structure cylindrique creuse formant un canal avec le même diamètre interne que celui dudit rotor extérieur (543) et une longueur d'environ quatre fois le diamètre de ladite conduite avec ledit conduit et courbé au milieu de ladite longueur afin de former un coude de 90 degrés avec une moitié dudit conduit orienté avec son axe longitudinal horizontal et l'autre moitié dudit conduit orienté avec son axe longitudinal vertical de la partie supérieure de la partie verticale dudit conduit relié à la partie inférieure de ladite structure de support de pare-brise (1009) par l'intermédiaire les pièces jointes à ladite structure de support de pare-brise (1009) structures de support radiaux avec la partie horizontale dudit conduit comportant un entonnoir évasé fixé à son extrémité ouverte avec la partie horizontale dudit conduit relié à ladite tige rigide par l'intermédiaire d'une connexion à ladite bague extérieure de telle sorte que l'ensemble du conduit tourne autour de l'axe longitudinal de ladite tige rigide à l'unisson avec ladite structure de support de pare-brise (1009) de sorte que l'extrémité ouverte de l'entonnoir est en fait toujours dans le vent;
(h) une pluralité de structures planes rigides fixées sur les structures de support radial rotor interne - à rotor externe de façon à former une pluralité d'aubes de turbine orientées de telle manière à fournir un composant additionnel de couple à ladite rotation des masses par vertu du vent étant redirigé à travers ledit entonnoir et conduit et empiétant sur ladite turbine -avant d'être évacué par le sommet ouvert de ladite masse en rotation .

2. Dispositif selon la revendication 1, dans lequel lesdites voiles de ladite pluralité sont formées à partir de la liaison de structures planes rigides individuelles les unes aux autres de manière à former des structures articulées de sorte que la zone maximale de la surface collective est accordée pour capter l'énergie du vent dans une direction de rotation deladite masse en rotation mais dans le sens opposé de rotation de ladite masse tournante, le profil de ladite voilure articulée donnant une surface collective relativement minime de sorte que les forces asymétriques assurerent que la masse en rotation soit toujours initiee et maintenir la rotation dans un seul sens.

3. Dispositif selon la revendication 1, dans lequel lesdites voiles de ladite pluralité sont montées sur la structure dudit rotor extérieur (543) de façon a permettre à des mâts de liaison desdites voiles de pivoter radialement autour de leur axe longitudinal d'un angle déterminé par les limites physiques imposées par contact structurel avec ladite structure de rotor externe (543), de sorte a permettre auxdites voiles de produire un couple supérieur dans une direction de pivotement et produire un couple de rotation moindre dans la direction opposée de deplacement grâce à quoi assurer par des forces asymétriques que le masse en rotation ne tourne que dans une seule direction.
